# EUROPÄISCHE PATENTSCHRIFT

(11) **EP 3 325 249 B1**
(45) Veröffentlichungstag und Bekanntmachung des Hinweises auf die Patenterteilung: **19.04.2023**
(21) Anmeldenummer: 16722867.5
(22) Anmeldetag: 10.05.2016
(51) Int. Cl.: B29C 48/08, B29C 48/88, B29C 48/92, B29C 48/14, B29C 41/26, B29C 41/28, B29C 41/50

(54) **VORRICHTUNG UND VERFAHREN ZUR ERZEUGUNG EINES UNTERDRUCKS BEI EINER FOLIENMASCHINE**
DEVICE AND METHOD FOR GENERATING A NEGATIVE PRESSURE IN A FILM MACHINE
DISPOSITIF ET PROCÉDÉ PERMETTANT DE CRÉER UN VIDE DANS UNE LIGNE DE PRODUCTION DE FILMS

(30) Priorität: 24.07.2015 DE 102015112130; 11.09.2015 DE 102015115397
(43) Veröffentlichungstag der Anmeldung: 30.05.2018
(73) Patentinhaber: Windmöller & Hölscher KG, 49525 Lengerich (DE)
(72) Erfinder: SCHMITZ, Torsten, 48268 Greven (DE)
(86) Internationale Anmeldenummer: PCT/EP2016/060451
(87) Internationale Veröffentlichungsnummer: WO 2017/016693

(56) Entgegenhaltungen:
- EP-A2- 1 175 987
- EP-A2- 1 175 987
- WO-A1-2005/120998
- GB-A- 2 029 733
- JP-A- H06 155 494
- JP-A- H10 272 638
- JP-A- 2003 089 145
- JP-A- 2010 179 475
- US-A- 5 618 568
- US-A1- 2009 218 721

## Beschreibung

Die Erfindung betrifft eine Vorrichtung zur Erzeugung eines Unterdrucks für die Stabilisierung einer Schmelzefahne im Bereich einer Transportvorrichtung einer Folienmaschine, insbesondere bei einem Herstellungsprozess einer Kunststofffolie. Weiter betrifft die Erfindung ein Verfahren zur Herstellung einer Folie, insbesondere einer Kunststofffolie, wobei Folienmaterial aus einer Auslassvorrichtung in Form einer Schmelzefahne durch eine Transportvorrichtung herausgeführt wird. Die Erfindung betrifft außerdem eine Folienmaschine zur Herstellung von Kunststofffolie, insbesondere für eine Gießfolienanlage.

Es ist aus dem Stand der Technik bekannt, für einen Herstellungsprozess einer Kunststofffolie, insbesondere einer Stretch-Folie im Gießfolienverfahren, eine Vorrichtung zur Erzeugung eines Unterdrucks für die Stabilisierung einer Schmelzefahne einzusetzen. Diese sogenannte Vakuumbox ist dabei im Bereich einer Transportvorrichtung, insbesondere einer Gießwalze, unmittelbar an einer Auslassvorrichtung für das fließfähige Folienmaterial (Schmelzefahne) angeordnet. Hierdurch kann ein Unterdruck erzeugt werden, welcher bestimmt, wie stark die Schmelzefahne an die Transportvorrichtung angesaugt wird. Weiter wird durch den Unterdruck die durch die Transportvorrichtung aufgrund der Rotationsbewegung eingeschleppte Luft entfernt. Der Unterdruck wird beispielsweise durch ein Gebläse erzeugt, wobei die Gebläseleistung bzw. die Unterdruckintensität die Stabilität der Schmelzefahne und somit die mechanischen Eigenschaften der Folie beeinflusst. So kann beispielsweise aufgrund der Verringerung der eingeschleppten Luftmenge die Dehnfähigkeit der Folie beeinflusst werden. Das Dokument JP H10 272638 A befasst sich mit der Herstellung einer Folie und einer Vorrichtung zur Herstellung einer solchen Folie. Das Dokument JP 2010 179475 A offenbart eine Vorrichtung zur Erzeugung eines Unterdrucks. Auch die Schriften WO 2005/120998 A1, EP 1 175 987 A2 und JP 2003 089145 A offenbaren eine Vorrichtung zum Erzeugen eines Unterdrucks.

Allerdings kann der von der Vorrichtung erzeugte Unterdruck sich negativ auf den Randbereich der Folie auswirken. So kann ein Unterdruck, welcher für die Folieneigenschaften optimal eingestellt ist, im Randbereich jedoch die Stabilität und die Eigenschaften des Rands verschlechtern. Der Randbereich der Schmelzefahne wird üblicherweise aufgrund des Neck-Ins bei der resultierenden Folie vor dem Aufwickeln als sogenannter Randstreifen von der Folienbahn abgetrennt, sodass als nutzbarer Folienbereich nur der verbleibende Hauptbereich (Nettobereich) dient. Der Randbereich kann aufgrund des für den mittleren Hauptbereich der Folie optimierten Unterdrucks beispielsweise umklappen und zu einem Abriss der Schmelzefahne führen und somit den nutzbaren Bereich der Folie zusätzlich verringern. Auch können sich Nachteile für die Prozessgeschwindigkeit und die Stabilität des Herstellungsprozesses ergeben. Eine Verringerung dieser Nachteile wird bekannterweise durch die Einbringung einer zusätzlichen Schmelzeströmung in den Rändern erzielt. Dies ist jedoch mit höheren Kosten verbunden und erlaubt nur bedingt verbesserte Folieneigenschaften.

Es ist daher eine Aufgabe der vorliegenden Erfindung, die voranstehend beschriebenen Nachteile zumindest teilweise zu beheben. Insbesondere ist es Aufgabe, sowohl die Prozessstabilität, als auch die Folieneigenschaften, welche durch die Unterdruckerzeugung beeinflusst werden, zu verbessern und/oder verbessert und zuverlässiger steuern zu können. Weiter sollen insbesondere die Eigenschaften des Randbereiches der Folie optimiert werden und die Kosten für die Herstellung verringert werden.

Die voranstehende Aufgabe wird gelöst durch eine Vorrichtung zur Erzeugung eines Unterdrucks mit den Merkmalen des Anspruchs 1 sowie durch ein Verfahren zur Herstellung einer Folie mit den Merkmalen des Anspruchs 16 und durch eine Folienmaschine mit den Merkmalen des Anspruchs 21.

Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Vorrichtung und der erfindungsgemäßen Folienmaschine, und jeweils umgekehrt, sodass bezüglich der Offenbarung zu den einzelnen Erfindungsaspekten stets wechselseitig Bezug genommen wird bzw. werden kann.

Die erfindungsgemäße Vorrichtung dient der Erzeugung eines Unterdrucks für die Stabilisierung einer Schmelzefahne im Bereich einer Transportvorrichtung einer Folienmaschine, insbesondere bei einem Herstellungsprozess einer Folie, insbesondere einer Stretch-Folie und/oder Kunststofffolie, insbesondere als ein Endlosmaterial. Die Erzeugung des Unterdrucks bewirkt insbesondere, dass zum einen eine Ansaugung der Schmelzefahne an die Transportvorrichtung erfolgt und zum anderen die durch die Bewegung, insbesondere Rotation, der Transportvorrichtung eingeschleppte Luft reduziert wird. Vorzugsweise weist die erfindungsgemäße Vorrichtung mindestens eine Hauptkammer zur Erzeugung eines ersten Unterdrucks in einem ersten Einflussbereich und mindestens eine Nebenkammer zur Erzeugung eines zweiten Unterdrucks in einem zweiten Einflussbereich auf. Dabei ist der erste Einflussbereich wenigstens einem Hauptbereich der Schmelzefahne und/oder der Folie und der zweite Einflussbereich wenigstens einem Randbereich der Schmelzefahne und/oder der Folie benachbart zum Hauptbereich zuordenbar, wobei der erste Unterdruck sich von dem zweiten Unterdruck unterscheidet. Es kann somit eine Stabilisierung der Schmelzefahne bewirkt werden. Weiter ergibt sich der Vorteil, dass die Funktionalitäten Prozessstabilität und Folieneigenschaften voneinander entkoppelt werden können. Die unterschiedlichen (ersten und zweiten) Einflussbereiche sind damit auch unterschiedliche Funktionsbereiche. Üblicherweise wird über die gesamte Breite der Schmelzefahne ein zumindest im Wesentlichen gleicher Unterdruck sowohl für den mittleren Hauptbereich als auch für den Randbereich erzeugt. Dies hat den Effekt, dass die Prozessstabilität, welche insbesondere durch die Eigenschaften und die Stabilität des Folienrands bestimmt wird, und die Folieneigenschaften, insbesondere des Hauptbereiches bzw. Nettobereiches, miteinander gekoppelt sind und sich daher nicht unabhängig voneinander optimieren lassen. Dies ist insbesondere bei Folien, insbesondere StretchFolien, welche besonders dünn oder besonders hoch dehnfähig oder besonders gering dehnfähig sein sollen, problematisch. Insbesondere erfolgt daher erfindungsgemäß eine entsprechende "Entkopplung" der Funktionalitäten Prozessstabilität und Folieneigenschaften.

Um die Prozessstabilität weiter zu verbessern, kann insbesondere im Randbereich in Abhängigkeit von Prozessparametern, wie einer Rezeptur, der Randdicke, der gewünschten Foliendicke und/oder einer Anordnung der Auslassvorrichtung zur Transportvorrichtung bzw. Düse zur Gießwalze, oder dergleichen, der zweite Unterdruck eingestellt werden. Für einen dicken Rand der Folie muss zum Beispiel berücksichtigt werden, dass ein hoher zweiter Unterdruck im zweiten Einflussbereich durch die Nebenkammer erzeugt wird. Dies ermöglicht ein schnelles und effektives Abkühlen auf der Transportvorrichtung. Dagegen wird für einen dünnen Rand der Folie ein geringerer zweiter Unterdruck eingestellt, um ein Umklappen des Randes zu vermeiden.

Um die Folieneigenschaften, insbesondere unabhängig (entkoppelt) von der Prozessstabilität, zu optimieren, wird vorzugsweise der erste Unterdruck im ersten Einflussbereich, das heißt im Hauptbereich, insbesondere unabhängig vom zweiten Unterdruck im zweiten Einflussbereich, in Abhängigkeit von einer Folieneigenschaftsvorgabe eingestellt. Dabei ist es auch denkbar, dass eine erste Hauptkammer und eine zweite Hauptkammer, insbesondere mit jeweiligen ersten bzw. zweiten Nebenkammern vorgesehen sind, wobei der erste Unterdruck der ersten und zweiten Hauptkammer unabhängig vom zweiten Unterdruck der ersten und zweiten Nebenkammer eingestellt wird. Vorzugsweise wird durch den ersten Unterdruck die im Hauptbereich der Folie bzw. Schmelzefahne eingeschleppte Luftmenge beeinflusst, welche den Wärmeübergangskoeffizienten zwischen der Schmelze und der zur Kühlung der Schmelze eingesetzten Transportvorrichtung unmittelbar bestimmt. Dieser Wärmeübergang ist insbesondere bei sehr dünnen Folien der dominierende Einflussfaktor auf die Abkühlkurve der Schmelze und die entsprechend zur Relaxation der Polymermoleküle zur Verfügung stehende Verweilzeit. Dabei wird zum Beispiel entsprechend einer ersten Folieneigenschaftsvorgabe vorzugsweise ein geringerer erster Unterdruck eingestellt, wodurch ein geringerer Wärmeübergangskoeffizient bewirkt wird. Dies führt zu einer langsameren Abkühlung und zu einer längeren Relaxationszeit und somit zu einer höheren Dehnfähigkeit der Folie. Dagegen kann zum Beispiel gemäß einer zweiten Folieneigenschaftsvorgabe bevorzugt für den ersten Unterdruck ein höherer Unterdruck eingestellt werden, was zu einem höheren Wärmeübergangskoeffizienten und zu einer schnelleren Abkühlung mit einer kürzeren Relaxationszeit und somit zu einer geringeren Dehnfähigkeit der Folie führt. Hierdurch können höhere Dehnungswerte der Folie durch Einstellen eines besonders geringen Unterdrucks im Hauptbereich erzielt werden. Gleichzeitig können durch die Einstellung eines besonders hohen Unterdrucks im Hauptbereich geringere Dehnungswerte der Folie erzielt werden. Aufgrund der Entkopplung der Prozessstabilität von den Folieneigenschaften durch den Einsatz des vom ersten Unterdruck unterschiedlichen zweiten Unterdrucks wird ferner der Randbereich der Folie nicht negativ beeinflusst. Die Einstellung für den zweiten Unterdruck kann dabei ebenfalls durch die Folieneigenschaftsvorgabe oder durch Prozessparameter bestimmt sein. Die für die Prozessstabilität in den Randbereichen erforderlichen Änderungen des Unterdrucks wirken sich daher nicht unzulässig auf die mechanischen Eigenschaften der Folie aus, umgekehrt wirken Änderungen des ersten Unterdrucks zur Erzielung der gewünschten Folieneigenschaften sich nicht unzulässig auf die Stabilität des Randes im Randbereich aus.

Es ist weiter denkbar, dass in der Folienmaschine Folienmaterial, insbesondere als Endlosmaterial, aus einer Auslassvorrichtung in Form der Schmelzefahne durch die Transportvorrichtung herausgeführt wird. Dabei ist insbesondere die Schmelzefahne mit einer festen Breite herausführbar und/oder die Auslassvorrichtung und/oder eine Düse der Auslassvorrichtung mit einer festen Schmelzeaustrittsbreite (z.B. Breite der Düse und/oder der Schmelzefahne) und/oder mit festen Deckling-Einsätzen ausgestaltet. Alternativ oder zusätzlich kann die Düse auch mit kontinuierlich oder stufenweise verschiebaren Deckling-Einsätzen ausgestaltet sein. Dies erlaubt die einfache Einstellung des zweiten Unterdrucks im Randbereich der Schmelzefahne und einen zuverlässigen Transport des Folienmaterials.

Optional kann es vorgesehen sein, dass die Hauptkammer als eine erste Hauptkammer ausgeführt ist, und insbesondere eine zweite Hauptkammer vorgesehen ist. Die erste und zweite Hauptkammer bilden gemeinsam vorzugsweise eine Doppelkammer-Vakuumbox, welche durch die Nebenkammern erweitert wird. Die zweite Hauptkammer kann in Bezug zur (relativ zur) ersten Hauptkammer entfernter zur Schmelzefahne anordenbar sein. Dabei bestimmt insbesondere die erste Hauptkammer, wie stark die Schmelzefahne an die Transportvorrichtung angesaugt wird. Die zweite Hauptkammer besitzt insbesondere vorrangig die Aufgabe, die eingeschleppte Luft zu reduzieren. Auf diese Weise kann besonders effektiv eine Absaugung der eingeschleppten Luft und die Ansaugung der Schmelzefahne erfolgen und gleichzeitig im Hauptbereich (das heißt im Nettobereich der resultierenden Folie) ein anderer Unterdruck eingestellt werden als im Randbereich der Folie. Die erste und zweite Hauptkammer können beispielsweise durch einen Steg voneinander getrennt sein und/oder jeweils mit einer separat ausgebildeten Strömungsvorrichtung verbunden sein. Dabei kann bevorzugt sowohl die erste Hauptkammer als auch die zweite Hauptkammer die mindestens eine Nebenkammer zur Erzeugung des zweiten Unterdrucks in dem zweiten Einflussbereich aufweisen. Alternativ ist es denkbar, dass ausschließlich die erste Hauptkammer die zumindest eine Nebenkammer aufweist.

Des Weiteren kann es vorgesehen sein, dass die Transportvorrichtung derart ausgebildet ist, dass nach einer gewissen Zeit das Folienmaterial auf der Transportvorrichtung oder vor der Transportvorrichtung erstarrt. Das erstarrte Folienmaterial kann beispielsweise an einem Abzugsort von der Transportvorrichtung entfernt werden. Alternativ oder zusätzlich ist es denkbar, dass die Folie, welche aus dem Folienmaterial bzw. der Schmelzefahne hergestellt wird, eine Gießfolie ist. Auch ist es denkbar, dass die erfindungsgemäße Vorrichtung in eine Gießfolienmaschine integriert ist oder integrierbar ist, bei der die Transportvorrichtung das Folienmaterial aus der Auslassvorrichtung herauszieht. Somit ist ein flexibler Einsatz der erfindungsgemäßen Vorrichtung möglich.

Die Transportvorrichtung kann beispielsweise eine Gießwalze bzw. ein Chill Roll sein. Dabei kann die Transportvorrichtung vorteilhafterweise zylinderförmig ausgestaltet, und insbesondere um eine Rotationsachse drehbar gelagert sein. Somit kann es vorgesehen sein, dass die Transportvorrichtung während des gesamten Verfahrens für den entsprechenden Transport und die Kühlung des auf ihrer Oberfläche angeordneten Folienmaterials rotiert. Die Rotationsgeschwindigkeit der Transportvorrichtung kann dabei ein Prozessparameter sein, welcher insbesondere für die Einstellung des ersten und/oder zweiten Unterdrucks berücksichtigt wird. Somit können die Folieneigenschaften und die Prozessstabilität in Abhängigkeit von der Transportvorrichtung optimiert werden.

Zudem wird im Rahmen der Erfindung vorgesehen, dass die Hauptkammer strömungstechnisch von der Nebenkammer durch ein Abdichtelement getrennt ist. Das Abdichtelement dient dabei insbesondere als Zwischendichtung, um den ersten Einflussbereich bzw. den Hauptbereich vom zweiten Einflussbereich bzw. dem Randbereich zu trennen. Das Abdichtelement ist vorzugsweise zwischen der Transportvorrichtung, insbesondere der Gießwalze, und einem Gehäuse der Vorrichtung, insbesondere im Bereich einer Haupt- und/oder Nebenkammeröffnung, angeordnet. Die Hauptkammeröffnung ist dabei insbesondere als eine luftdurchlässige Öffnung der Hauptkammer für den Lufteintritt und somit zur Unterdruckerzeugung ausgestaltet. Die Nebenkammeröffnung ist dabei insbesondere als luftdurchlässige Öffnung der Nebenkammer für den Lufteintritt und somit zur Unterdruckerzeugung ausgestaltet. Die Haupt- und/oder Nebenkammeröffnung ist dabei vorzugsweise in dem der Schmelzefahne zugewandten Bereich der Vorrichtung bzw. des Gehäuses ausgebildet. Das Abdichtelement kann sich bevorzugt ausschließlich im Bereich einer ersten Hauptkammer oder alternativ sowohl im Bereich der ersten Hauptkammer als auch einer zweiten oder weiteren Hauptkammer erstrecken. Das Abdichtelement ist dabei vorzugsweise beabstandet zum Seitenbereich der Vorrichtung angeordnet, wobei im äußeren (äußersten) Seitenbereich der Vorrichtung gegebenenfalls außerdem Enddichtungen vorgesehen sind, welche den zweiten Einflussbereich bzw. die Nebenkammern vom Außenbereich der Vorrichtung trennen. Durch die Enddichtungen werden dabei bevorzugt der erste Einflussbereich und/oder der zweite Einflussbereich von der Umgebung der Vorrichtung getrennt. Die Enddichtungen können daher vorzugsweise unverstellbar bzw. unverschiebbar an der Vorrichtung ausgebildet sein. Durch die Abdichtelemente bzw. das Abdichtelement werden insbesondere der erste und zweite Einflussbereich voneinander getrennt. Dies hat den Vorteil, dass zuverlässig der Unterdruck erzeugt und erhalten werden kann.

Es kann im Rahmen der Erfindung vorgesehen sein, dass die Hauptkammer und/oder die Nebenkammer derart ausgestaltet und an der Transportvorrichtung der Folienmaschine anordenbar ist/sind, dass die Schmelzefahne an die Transportvorrichtung der Folienmaschine ansaugbar ist. Dies ermöglicht zum Beispiel eine zuverlässige Aufnahme sowie einen zuverlässigen Transport des Folienmaterials durch die Transportvorrichtung. Hierzu ist die Transportvorrichtung beispielsweise unmittelbar angrenzend an einer Auslassvorrichtung der Folienmaschine angeordnet, um das gegebenenfalls fließfähige Folienmaterial, das heißt insbesondere die Schmelzefahne, wenn es aus der Auslassvorrichtung tritt, aufzunehmen. Die Hauptkammer und/oder die Nebenkammer ist dabei derart unmittelbar angrenzend an der Transportvorrichtung und/oder der Auslassvorrichtung angeordnet, dass eine Ansaugung der Schmelzefahne an die Transportvorrichtung durchführbar ist. Dabei kann es vorgesehen sein, das die Transportvorrichtung weder die Auslassvorrichtung, noch die erfindungsgemäße Vorrichtung kontaktiert.

Weiter ist es im Rahmen der Erfindung denkbar, dass die Nebenkammer derart ausgestaltet und an der Transportvorrichtung der Folienmaschine anordenbar ist, dass eine Stabilisierung des Randbereichs durchführbar ist. Unter Stabilisierung wird hierbei insbesondere verstanden, dass der Randbereich bzw. der zweite Einflussbereich einen derart eingestellten und vom ersten Unterdruck unterschiedlichen zweiten Unterdruck aufweist, dass die Stabilität des Folienrands erhalten wird. Bei einem dicken Rand kann hierzu beispielsweise ein besonders hoher Unterdruck (zweiter Unterdruck, welcher insbesondere höher als der erste Unterdruck ist) erzeugt werden, um diesen dicken Rand schnell und effektiv auf der Transportvorrichtung abkühlen zu können. Bei einem dünnen Rand kann dabei insbesondere ein geringerer zweiter Unterdruck erzeugt werden, insbesondere geringer als der erste Unterdruck, um ein Umklappen des Randes zu vermeiden, und um die Prozessstabilität zu erhöhen.

Es ist ferner denkbar, dass die Vorrichtung eine Breitenerstreckung in Breitenrichtung aufweist, welche insbesondere an die Breite einer Auslassvorrichtung der Folienmaschine anpassbar ist, wobei die Hauptkammer und die mindestens eine Nebenkammer in Breitenrichtung benachbart angeordnet sind. Unter Breite bzw. Breitenerstreckung wird dabei insbesondere eine Ausdehnung in Breitenrichtung verstanden, wobei die Breitenrichtung vorzugsweise eine Richtung ist, in welcher die Hauptkammer benachbart zu mindestens einer Nebenkammer angeordnet ist. Die Vorrichtung ist dabei bevorzugt derart an der Auslassvorrichtung und/oder der Transportvorrichtung anordenbar, dass die Breitenrichtung im Wesentlichen identisch zur Richtung der Rotationsachse der Transportvorrichtung ist bzw. hierzu parallel ist und/oder die Breitenrichtung im Wesentlichen orthogonal zur Transportrichtung des Folienmaterials an der Transportvorrichtung verläuft. Die Breitenerstreckung ist dabei insbesondere derart angepasst, dass ein Unterdruck, das heißt der erste und/oder der zweite Unterdruck, entlang der gesamten Breite der Schmelzefahne ausgeübt werden kann.

Es kann im Rahmen der Erfindung vorgesehen sein, dass ein Verstellmechanismus vorgesehen ist, wodurch die Hauptkammer und Nebenkammer in ihrer Größe in Breitenrichtung variabel einstellbar sind. Der Verstellmechanismus ist hierbei beispielsweise mit mindestens einem Abdichtelement mechanisch verbunden. Ebenfalls ist es denkbar, dass das Abdichtelement als Wandung der Vorrichtung ausgebildet ist und/oder die Wandung des Gehäuses der Vorrichtung verstellbar ausgestaltet ist. Die Wandung ist beispielsweise mit dem Abdichtelement fluiddicht verbunden, um die Einflussbereich voneinander abzugrenzen. Die variable Einstellung der Größe erfolgt beispielsweise durch eine Bewegung des mindestens einen Abdichtelements, welches hierzu beispielsweise beweglich an der Vorrichtung gelagert ist. Alternativ oder zusätzlich ist es denkbar, dass das Abdichtelement austauschbar ausgestaltet ist. So kann der Verstellmechanismus eine Aufnahme der erfindungsgemäßen Vorrichtung, insbesondere eines Gehäuses der erfindungsgemäßen Vorrichtung, umfassen, welche eine lösbare Befestigung des mindestens einen Abdichtelements an der Vorrichtung ermöglicht. Dabei können mehrere derartige Aufnahmen entlang der Breitenrichtung an der Vorrichtung für die Abdichtelemente vorgesehen sein, um insbesondere das Abdichtelement an / in diese Aufnahmen lösbar zu befestigen und damit an unterschiedliche Positionen in Breitenrichtung an der Vorrichtung anzubringen. Somit ist eine flexible Anpassung der Breitenerstreckung der Haupt- und/oder Nebenkammer an verschiedene Prozessparameter bzw. Folieneigenschaften, wie zum Beispiel die Breite des Rands, möglich.

Gemäß einem weiteren Vorteil kann es vorgesehen sein, dass ein Abdichtelement und/oder eine Wandung zur Abgrenzung der Hauptkammer von der Nebenkammer verstellbar, insbesondere manuell verstellbar und/oder verschiebbar ausgebildet ist. Die Verstell-und/oder Verschiebbarkeit erfolgt beispielsweise durch einen Verstellmechanismus, welcher mechanisch mit dem Abdichtelement und/oder der Wandung verbunden ist. Die Verstellbarkeit wird beispielsweise durch eine Austauschbarkeit und/oder durch eine bewegliche Lagerung des Abdichtelementes und/oder der Wandung ermöglicht, wobei die Verstellung und/oder Verschiebung insbesondere in Richtung der Rotationsachse der Transportvorrichtung erfolgt. Hierdurch ist es möglich, dass die Breite des zweiten Einflussbereiches zwischen einer Enddichtung und einer Zwischendichtung (Abdichtelement) derart gebildet wird, dass der zweite Einflussbereich sich im Wesentlichen nicht auf den Hauptbereich der Folie erstreckt. Sowohl die Wandung, als auch das wenigstens eine Abdichtelement können dabei dazu dienen, die erfindungsgemäße Vorrichtung von allen Seiten zur rotierenden Transportvorrichtung abzudichten. Es kann weiter vorgesehen sein, dass die Wandung und/oder das Abdichtelement beispielsweise Bürsten und/oder Kunststoffelemente aufweist. Diese können zum Beispiel derart beabstandet zur Transportvorrichtung angeordnet sein, dass ein Spalt zwischen der Transportvorrichtung und dem Abdichtelement und/oder der Wandung entsteht. Alternativ ist es auch denkbar, dass das Abdichtelement und/oder die Wandung zumindest teilweise die Transportvorrichtung kontaktiert.

Es kann ferner vorgesehen sein, dass wenigstens zwei Nebenkammern vorgesehen sind, welche insbesondere im äußeren Seitenbereich der Vorrichtung in Breitenrichtung angeordnet sind, wobei zwischen den Nebenkammern die Hauptkammer angeordnet ist. Weiter ist es denkbar, dass für beide Nebenkammern jeweils ein unterschiedlich eingestellter oder alternativ nur ein im Wesentlichen gleich eingestellter Unterdruck einstellbar ist. Auch kann es möglich sein, dass die beiden Nebenkammern jeweils unterschiedlich in ihrer Breite einstellbar ausgebildet sind. Die beiden Nebenkammern dienen dabei insbesondere dazu, jeweils in einem linken und rechten zweiten Einflussbereich den Unterdruck für den jeweils linken oder rechten Randbereich der Schmelzefahne bzw. Folie zu erzeugen. Auf diese Weise ist eine noch flexiblere Einstellung für die Erhöhung der Prozessstabilität möglich.

Ebenfalls ist es denkbar, dass die Abmessung der mindestens einen Nebenkammer in Breitenrichtung derart ausgestaltet ist, dass der zweite Einflussbereich der Nebenkammer und/oder jeder Nebenkammer jeweils zwischen 2% bis 10% von dem gesamten Einflussbereich der Vorrichtung oder des ersten Einflussbereiches der Hauptkammer beträgt. Es ist insbesondere möglich, dass der Einflussbereich jeder Nebenkammer jeweils eine Wirkungsfläche aufweist, die zwischen 2% bis 10% von der Wirkungsfläche des gesamten Einflussbereiches der Vorrichtung oder der Wirkungsfläche des ersten Einflussbereiches der Hauptkammer beträgt. Der gesamte Einflussbereich ist dabei die Summe sämtlicher erster und zweiter Einflussbereiche der erfindungsgemäßen Vorrichtung. Die gesamte gemeinsame Erstreckung der Haupt- und Nebenkammern in Breitenrichtung entspricht beispielsweise der Breitenerstreckung des Auslassspalt bzw. der Düse der Auslassvorrichtung. Jede Nebenkammer weist insbesondere jeweils eine Erstreckung in Breitenrichtung auf, die zwischen 2% bis 10%, bevorzugt zwischen 5% und 8%, von der gesamten Breitenerstreckung der erfindungsgemäßen Vorrichtung oder der Hauptkammer beträgt. Somit wird der erforderliche Einflussbereich zur Einstellung der Prozessstabilität und der Eigenschaften des Folienrandes gewährleistet.

Es ist weiter denkbar, dass wenigstens ein Abdichtelement in Breitenrichtung stufenlos oder stufenweise verstellbar ausgestaltet ist, um zwischen der Hauptkammer und der Nebenkammer die jeweiligen Einflussbereiche variierbar, insbesondere vollständig, abzugrenzen, wobei insbesondere das Abdichtelement fluiddicht ausgestaltet ist. Der erste Einflussbereich wird beispielsweise durch den Abstand (in Breitenrichtung) zwischen benachbarten Abdichtelementen bestimmt. Der zweite Einflussbereich wird beispielsweise durch den Abstand (in Breitenrichtung) zwischen einem Abdichtelement und einer benachbart hierzu und im äußersten Seitenbereich der Vorrichtung angeordneten End-Abdichtung bestimmt. Die Verstellung des Abdichtelements erfolgt vorzugsweise durch ein Herausnehmen und ein erneutes Befestigen des Abdichtelements an der erfindungsgemäßen Vorrichtung, insbesondere an einer Wandung oder an einem Gehäuse der erfindungsgemäßen Vorrichtung. Alternativ oder zusätzlich ist es denkbar, dass das Abdichtelement bewegbar an der erfindungsgemäßen Vorrichtung gelagert ist. Hierdurch lassen sich die Einflussbereiche flexibel an bestimmte Folieneigenschaften oder Prozessparameter anpassen. Das Abdichtelement ist beispielsweise zwischen dem Gehäuse der Vorrichtung und der Transportvorrichtung, insbesondere einer Gießwalze, angeordnet.

Ferner kann im Rahmen der Erfindung vorgesehen sein, dass das Abdichtelement derart verstellbar ausgebildet ist, dass ein Abstand zwischen dem Abdichtelement und der Transportvorrichtung variierbar ist, wobei hierzu insbesondere das Abdichtelement austauschbar und/oder eine Erstreckung des Abdichtelements in Richtung der Transportvorrichtung verstellbar ausgeführt ist. Auf diese Weise kann die erfindungsgemäße Vorrichtung zum Beispiel an verschiedene Folienmaschinen oder Prozessparameter angepasst werden. Das Abdichtelement ist dabei beispielsweise beweglich an der Vorrichtung gelagert oder lösbar befestigt, um ein Austauschen des Abdichtelements mit einem weiteren Abdichtelement mit größerer Erstreckung zu erlauben. Die Verstellung kann beispielsweise automatisch durch einen Antrieb oder manuell erfolgen, wobei bevorzugt das Abdichtelement lösbar befestigt ist. Die verstellbare Erstreckung des Abdichtelements wird beispielsweise dadurch realisiert, dass das Abdichtelement selbst verschiebbare Elemente aufweist, um die Erstreckung in Richtung der Transportvorrichtung (manuell oder automatisch) zu vergrößern und/oder zu verkleiner.

Des Weiteren kann im Rahmen der Erfindung vorgesehen sein, dass das Abdichtelement an der der Schmelzefahne zugewandten Seite eine der Transportvorrichtung anpassbare gekrümmte, insbesondere konkave, Form aufweist. Auf diese Weise kann vorzugsweise ein möglichst konstanter Abstand zwischen dem Abdichtelement und der Transportvorrichtung bzw. dem auf der Transportvorrichtung transportierten Folienmaterial erzielt werden.

Ebenfalls kann es im Rahmen der Erfindung vorgesehen sein, dass das Abdichtelement flexibel und/oder elastisch verformbar ausgestaltet ist, insbesondere aus einem flexiblen und/oder elastisch verformbaren Kunststoff, um sich an die Transportvorrichtung anzupassen. Alternativ oder zusätzlich kann es möglich sein, dass das Abdichtelement an der Transportvorrichtung kontaktiert. Es ist in diesem Fall nicht notwendig, einen definierten Abstand zwischen der Transportvorrichtung und dem Abdichtelement vorzusehen, wodurch beispielsweise die Montage vereinfacht und die Erhaltung des Unterdruck gefördert wird.

Gemäß weiteren Vorteil kann es im Rahmen der Erfindung vorgesehen sein, dass wenigstens eine, insbesondere erste, Strömungsvorrichtung zur Unterdruckerzeugung im ersten Einflussbereich und vorzugsweise wenigstens eine weitere, insbesondere eine zweite, Strömungsvorrichtung zur Unterdruckerzeugung im zweiten Einflussbereich vorgesehen sind, welche insbesondere frequenzgeregelt betrieben werden. Die erste und/oder zweite Strömungsvorrichtung kann bevorzugt als ein Gebläse ausgebildet sein, das insbesondere frequenzgeregelt betrieben wird. Die Strömungsvorrichtung kann beispielsweise einen Frequenzumformer aufweisen, oder elektronische Frequenzumrichter aufweisen, um eine gewünschte Drehzahl einzustellen. Die erste Strömungsvorrichtung und/oder die zweite Strömungsvorrichtung können dabei insbesondere derart betrieben werden, dass eine Einstellung der Drehzahl in einem definierten Bereich möglich ist. Somit kann die Intensität des ersten und/oder zweiten Unterdrucks variiert werden. Insbesondere ist es denkbar, dass die erste und die zweite Strömungsvorrichtung jeweils separat und/oder unabhängig voneinander ausgebildet sind, um zuverlässig zwei voneinander unterschiedliche erste und zweite Unterdrücke zu erzeugen.

Von weiterem Vorteil kann wenigstens ein erstes luftführendes Leitungselement zur Strömungsverbindung mit einer ersten Strömungsvorrichtung an einem Hauptkammerdurchgang befestigt sein, und wenigstens ein zweites luftführendes Leitungselement zur Strömungsverbindung mit einer zweiten Strömungsvorrichtung an einem von dem Hauptkammerdurchgang beabstandeten Nebenkammerdurchgang befestigt sein. Der Hauptkammerdurchgang und/oder der Nebenkammerdurchgang ist dabei insbesondere als eine Öffnung im Gehäuse der erfindungsgemäßen Vorrichtung bzw. der Haupt- oder Nebenkammer ausgebildet. Das erste und/oder zweite luftführende Leitungselement ist vorzugsweise als Schlauch ausgestaltet, welcher die durch den Unterdruck eingesogene Luft von der entsprechenden Haupt- oder Nebenkammer zur Strömungsvorrichtung leitet. Hierbei kann die Strömungsvorrichtung separat von der Haupt-und/oder Nebenkammer ausgebildet und/oder beabstandet angeordnet sein. Somit kann zuverlässig ein Unterdruck erzeugt werden und eine flexible Anordnung der erfindungsgemäßen Vorrichtung gewährleistet werden. Alternativ kann es vorgesehen sein, dass die Strömungsvorrichtung unmittelbar an oder in der Haupt- und/oder Nebenkammer angeordnet bzw. integriert ist. Die Strömungsvorrichtung ist beispielsweise als Strömungsmaschine, insbesondere als Gebläse oder Kompressor oder Ventilator oder Vakuumpumpe zur Unterdruckerzeugung ausgebildet. Die Strömungsvorrichtung kann beispielsweise einen Motor, ggf. mit Überlastschutz, und/oder einen Frequenzumformer zur Anpassung der Drehzahl und/oder ein Laufrad und/oder Schaufeln zum Transport des Mediums, insbesondere Luft, aufweisen. Weiter kann die Strömungsvorrichtung zum Beispiel mit einem Saugvermögen von 20 bis 150.000 m³/h und/oder für eine Unterdruckerzeugung im ersten und/oder zweiten Einflussbereich und/oder innerhalb der Haupt- und/oder Nebenkammer von 1 mbar bis 900 mbar, bevorzugt 50 mbar bis 800 mbar, besonders bevorzugt 100 mbar bis 400 mbar ausgeführt sein.

Vorteilhafterweise kann vorgesehen sein, dass wenigstens ein Druckeinstellmittel zur Veränderung des Unterdrucks für den Hauptbereich und/oder den Randbereich vorgesehen ist, wobei vorzugsweise ausschließlich eine einzige Strömungsvorrichtung zur Unterdruckerzeugung in dem ersten Einflussbereich und/oder dem zweiten Einflussbereich und/oder einem linksseitigen und/oder rechtsseitigen zweiten Einflussbereich vorgesehen ist. Das oder einige der Druckeinstellmittel kann / können dabei beispielsweise als Drossel oder Luftzuführung oder als zusätzliches Gebläse / zusätzliche Strömungsvorrichtung ausgebildet sein. Bevorzugt wird in jedem Randbereich bzw. in jedem zweiten Einflussbereich der Unterdruck durch jeweils mindestens eine zusätzliche Strömungsvorrichtung (mit) erzeugt oder ausschließlich für jeden zweiten Einflussbereich nur durch eine einzige Strömungsvorrichtung erzeugt. Die zusätzlichen Strömungsvorrichtungen sind besonders bevorzugt frequenzgeregelt, das heißt weisen insbesondere eine (durch die Steuerungsvorrichtung) variierbare Drehzahl auf. Das Druckeinstellmittel dient dabei bevorzugt zur Balancierung des Hauptbereichs und/oder des rechten und linken Rands der Schmelzefahne bzw. Folie. Es kann also sinnvoll sein, sowohl für den rechten als auch für den linken Rand jeweils ein eigenes Druckeinstellmittel mit gemeinsamer Strömungsvorrichtung vorzusehen, wodurch ein unabhängig einstellbarer linksseitiger und ein rechtsseitiger zweiter Einflussbereich bzw. Unterdruck erzeugbar sind. Weiter ist es denkbar, dass für den zweiten Einflussbereich und den ersten Einflussbereich jeweils Druckeinstellmittel vorgesehen sind, wobei insgesamt für die erfindungsgemäße Vorrichtung nur eine einzige Strömungsvorrichtung zum Einsatz kommt. Hierdurch können beispielsweise Materialkosten reduziert werden. Weiter ist es denkbar, dass zum Beispiel für jeden Randbereich, das heißt zum Beispiel für eine erste und eine zweite Nebenkammer, und/oder für den Hauptbereich, das hießt für die Hauptkammer, dennoch jeweils eine eigene Strömungsvorrichtung und gleichzeitig jeweils ein Druckeinstellmittel vorgesehen ist. Dies kann beispielsweise die Zuverlässigkeit und Flexibilität erhöhen, wenn sowohl durch die Strömungsvorrichtung als auch durch das Druckeinstellmittel der Unterdruck einstellbar ist.

Es ist ferner denkbar, dass mindestens eine Sensorvorrichtung zumindest teilweise innerhalb der Hauptkammer und/oder Nebenkammer vorgesehen ist, um den Druck für den Hauptbereich und/oder Randbereich zu erfassen. Die Sensorvorrichtung der erfindungsgemäßen Vorrichtung kann dabei beispielsweise zumindest ein Sensorelement aufweisen, welches beispielsweise als ein Drucksensor ausgestaltet ist. Dabei wird der Druck beispielsweise im Hauptbereich und/oder im Randbereich vorzugsweise dadurch erfasst, dass eine indirekte Messung erfolgt, zum Beispiel durch Druckmessungen im Bereich der Nebenkammer und/oder Hauptkammer, welche durch die Sensorvorrichtung ausgewertet werden. Der entsprechende gemessene (Ist-) Wert (der Haupt- und/oder Nebenkammer) kann dabei beispielsweise in einer Rezeptur zur Herstellung der Folie abgespeichert werden. Weiter ist es auch denkbar, dass ein vordefinierter Soll-Wert in der Rezeptur abgespeichert ist und/oder aus der Rezeptur auslesbar ist, und mit dem gemessenen Ist-Wert verglichen wird. Hierdurch kann eine Überwachung der Prozessstabilität erfolgen.

Optional kann es vorgesehen sein, dass eine weitere, zweite Hauptkammer vorgesehen ist, wobei insbesondere die zweite Hauptkammer in Bezug zur Hauptkammer, das heißt insbesondere zur ersten Hauptkammer, entfernter zur Schmelzefahne anordenbar ist, um Luft an der Transportvorrichtung zu entfernen. Die erste Hauptkammer dient dabei insbesondere zur Ansaugung der Schmelzefahne an die Transportvorrichtung und die zweite Hauptkammer zur Entfernung der eingeschleppten Luft, um hierdurch die Folieneigenschaften und/oder die Folienstabilität und/oder die (Transport-) Geschwindigkeit zu verbessern.

Es ist ferner denkbar, dass wenigstens eine Strömungsvorrichtung der erfindungsgemäßen Vorrichtung zur geregelten Variierung des ersten und/oder zweiten Unterdrucks mit einer Steuerungsvorrichtung der erfindungsgemäßen Vorrichtung elektrisch oder drahtlos verbunden ist, wobei insbesondere die Steuerungsvorrichtung eine Datenspeichereinheit zur Speicherung von Prozessparametern und/oder einen Regelalgorithmus aufweist. Der Regelalgorithmus kann dabei beispielsweise als Computerprogramm dazu ausgebildet sein, ein erfindungsgemäßes Verfahren durchzuführen. Auf diese Weise kann automatisiert die Prozessstabilität und/oder die Folieneigenschaften überwacht und/oder geregelt werden. Die Reglung des ersten und/oder zweiten Unterdrucks durch die Steuerungsvorrichtung erfolgt aber beispielsweise in Abhängigkeit von Prozessparametern, insbesondere durch einen Vergleich mit den von der Sensorvorrichtung gemessenen Werten. Auch kann es möglich sein, dass der erste und/oder der zweite Unterdruck bei Änderungen der Prozessparameter, wie der Geschwindigkeit von zum Beispiel der Transportvorrichtung, oder wie dem Hoch-und Runterrampen der Folienmaschine, automatisch nachgeführt und/oder angepasst wird, um jederzeit die bestmögliche Stabilität des Prozesses zu gewährleisten. Weiter ist es auch denkbar, dass zur Erzielung von bestimmten Prozessparameter, wie besonders hohen Dehnungswerten oder geringen Dehnungswerten der Folie, im ersten Einflussbereich besonders geringe bzw. hohe Unterdrücke eingestellt werden, während insbesondere in den zweiten Einflussbereichen der Unterdruck im Wesentlichen konstant bleibt. Es ist auch denkbar, dass der Unterdruck in der Hauptkammer durch einen entsprechenden Algorithmus so geregelt wird, dass die Folieneigenschaften auch bei geänderten Prozess- oder Umgebungsbedingungen konstant gehalten werden. Besonders vorteilhaft ist hier die Entkopplung von Folieneigenschaften und Prozessstabilität als eine Grundvoraussetzung für die Machbarkeit einer solchen Regelung.

Ebenfalls Gegenstand der Erfindung ist ein Verfahren zur Herstellung einer Folie, insbesondere einer Kunststofffolie. Hierbei wird insbesondere Folienmaterial aus einer Auslassvorrichtung in Form einer Schmelzefahne durch eine Transportvorrichtung herausgeführt. Dabei wird vorzugsweise durch mindestens eine Hauptkammer ein erster Unterdruck in einem ersten Einflussbereich erzeugt und durch mindestens eine Nebenkammer ein zweiter Unterdruck in einem zweiten Einflussbereich erzeugt. Der erste Einflussbereich wird dabei wenigstens einem Hauptbereich der Schmelzefahne und/oder der Folie und der zweite Einflussbereich wird wenigstens einem Randbereich der Schmelzefahne und/oder der Folie benachbart zum Hauptbereich zugeordnet. Insbesondere ist sowohl ein erster Randbereich als auch ein zweiter Randbereich vorgesehen und benachbart zum Hauptbereich angeordnet, wobei der erste und zweite Randbereich jeweils auf gegenüberliegenden Seiten des Hauptbereichs angeordnet sind. Der erste Unterdruck unterscheidet sich von dem zweiten Unterdruck, wodurch eine Stabilisierung der Schmelzefahne bewirkt wird. Der erste Unterdruck in dem ersten Einflussbereich wird dabei insbesondere indirekt durch die Hauptkammer und der zweite Unterdruck in dem zweiten Einflussbereich wird insbesondere indirekt durch die Nebenkammer dadurch erzeugt, dass die Hauptkammer mit einer ersten Strömungsvorrichtung und die Nebenkammer mit einer zweiten Strömungsvorrichtung verbunden sind. Weiter kann es vorgesehen sein, dass das Folienmaterial sich auf oder vor der Transportvorrichtung abkühlt und/oder erstarrt. Das erfindungsgemäße Verfahren bringt die gleichen Vorteile mit sich, wie sie ausführlich mit Bezug auf eine erfindungsgemäße Vorrichtung erläutert worden sind. Weiter kann das erfindungsgemäße Verfahren geeignet sein, eine erfindungsgemäße Vorrichtung zu betreiben.

Ebenfalls ist es im Rahmen der Erfindung denkbar, dass eine Abmessung der Hauptkammer und/oder Nebenkammer in Breitenrichtung stufenlos oder in Stufen an die Auslassvorrichtung der Folienmaschine angepasst wird. Vorzugsweise wird durch eine Anpassung der Nebenkammer aufgrund der benachbarten Anordnung der Nebenkammer zur Hauptkammer und der insbesondere fixen Erstreckung der Vorrichtung in Breitenrichtung ebenfalls die Abmessung der Hauptkammer in Breitenrichtung stufenlos oder stufenweise an die Auslassvorrichtung der Folienmaschine, und damit auch an den Haupt- bzw. Randbereich der Schmelzefahne bzw. der Folie, angepasst. Die Erstreckung der Vorrichtung in Breitenrichtung bezieht sich dabei vorzugsweise (im Wesentlichen) auf die Summe der Abmessungen sämtlicher Haupt- und Nebenkammern in Breitenrichtung. Die Anpassung erfolgt bevorzugt derart, dass sich der erste und zweite Einflussbereich entlang der gesamten Breite der Schmelzefahne erstrecken und sich der zweite Einflussbereich insbesondere auf den Randbereich erstreckt und sich der erste Einflussbereich insbesondere auf den Hauptbereich der Schmelzefahne bzw. Folie erstreckt. Hierdurch ist ebenfalls eine Anpassung an Prozessparameter möglich.

Weiter kann es vorgesehen sein, dass eine Abmessung der Hauptkammer und/oder Nebenkammer in Breitenrichtung und/oder die Intensität des zweiten Unterdrucks automatisch an Prozessparameter angepasst wird. Diese automatische Anpassung erfolgt beispielsweise durch eine Steuerungsvorrichtung, welche zum Beispiel zur Einstellung der Intensität mit zumindest einer Strömungsvorrichtung oder zur Einstellung der Abmessung der Haupt- und/oder Nebenkammer in Breitenrichtung zum Beispiel mit einer Antriebseinheit zur Verschiebung von mindestens einem Abdichtelement verbunden ist. Die Prozessparameter können dabei beispielsweise die Rotationsgeschwindigkeit der Transportvorrichtung, vorgespeicherte Rezepturen, die gewünschte Foliendicke, die Foliencharakteristik, die Folien- und/oder Randbereich- und/oder Hauptbereich-Breite und/oder die Anordnung der erfindungsgemäßen Vorrichtung an der Schmelzefahne betreffen. Durch die Anpassung wird beispielsweise auch bei einem Hoch- und Runterrampen (der Folienmaschine) jederzeit die bestmögliche Stabilität des Prozesses gewährleistet.

Es kann weiter vorgesehen sein, dass der zweite Unterdruck und/oder der erste Unterdruck unabhängig voneinander, insbesondere an Prozessparametern, angepasst werden. Dabei kann es vorgesehen sein, dass der erste Unterdruck stets kleiner als der zweite Unterdruck oder umgekehrt ist. Auch kann es möglich sein, dass der erste Unterdruck und der zweite Unterdruck derart einstellbar sind, dass sie sich um mindestens 5 mbar und/oder mindestens 10 mbar und/oder mindestens 100 mbar und/oder mindestens 200 mbar voneinander unterscheiden. Zur Anpassung kann beispielsweise eine Steuerungsvorrichtung mit einer ersten Strömungsvorrichtung für den ersten Unterdruck und mit einer zweiten Strömungsvorrichtung für den zweiten Unterdruck verbunden sein.

Gemäß einer vorteilhaften Weiterbildung der Erfindung kann es vorgesehen sein, dass die durch das Verfahren hergestellte Folie eine Dicke von maximal 15 µm, bevorzugt maximal 12 µm, besonders bevorzugt maximal 10 µm aufweist und/oder in einem Bereich von 1 µm bis 17 µm, vorzugsweise 8 µm bis 15 µm liegt. Bei derartigen Foliendicken ist die unabhängige Einstellung der Prozessstabilität und der Folieneigenschaften, das heißt die unabhängige Einstellung des ersten und zweiten Unterdrucks, von besonderer Bedeutung. Das erfindungsgemäße Verfahren erlaubt dabei die Herstellung mit hoher Geschwindigkeit, insbesondere von besonders dünnen oder besonders hoch bzw. gering dehnfähigen Folien, insbesondere als Endlosmaterial.

Vorteilhafterweise kann es vorgesehen sein, dass der erste Unterdruck und/oder der zweite Unterdruck automatisch und/oder geregelt, insbesondere unabhängig voneinander, variiert wird/werden, insbesondere in Abhängigkeit von Prozessparametern. Hierbei kann beispielsweise die Steuerungsvorrichtung zur Regelung, beispielsweise durch einen Regelalgorithmus, genutzt werden. Die Prozessparameter können dabei beispielsweise aus einer nicht flüchtigen Datenspeichereinheit der Steuerungsvorrichtung ausgelesen werden. Bei der Regelung des ersten und/oder zweiten Unterdrucks wird beispielsweise ein Ist-Wert, welcher als gemessener Wert von einer Sensorvorrichtung erfasst wird, mit einem Soll-Wert verglichen und durch die Ansteuerung der Strömungsvorrichtung der Ist-Wert (das heißt zum Beispiel der Unterdruck) an den Soll-Wert angepasst bzw. geregelt.

Ebenfalls unter Schutz gestellt ist eine Folienmaschine zur Herstellung von Folie, insbesondere Kunststofffolie, insbesondere eine Gießfolienmaschine, insbesondere für die Herstellung einer Stretch-Folie (insbesondere im Gießfolienverfahren). Dabei ist es vorzugsweise vorgesehen, dass die Folienmaschine eine Transportvorrichtung zum Transport von Folienmaterial und eine Auslassvorrichtung umfasst. Dabei wird das Folienmaterial aus der Auslassvorrichtung in Form einer Schmelzefahne durch die Transportvorrichtung herausgeführt bzw. ist herausführbar. Hierbei ist insbesondere vorgesehen, dass mindestens eine Hauptkammer zur Erzeugung eines ersten Unterdrucks in einem ersten Einflussbereich und mindestens eine Nebenkammer zur Erzeugung eines zweiten Unterdrucks in einem zweiten Einflussbereich vorgesehen sind, wobei der erste Einflussbereich wenigstens einem Hauptbereich der Schmelzefahne und der zweite Einflussbereich wenigstens einem Randbereich der Schmelzefahne benachbart zum Hauptbereich zuordenbar ist, und wobei sich der erste Unterdruck von dem zweiten Unterdruck unterscheidet, um eine Stabilisierung der Schmelzefahne zu bewirken. Hierdurch ergeben sich die gleichen Vorteile, wie sie ausführlich mit Bezug auf ein erfindungsgemäßes Verfahren und/oder eine erfindungsgemäße Vorrichtung beschrieben worden sind. Weiter ist es denkbar, dass die erfindungsgemäße Folienmaschine eine erfindungsgemäße Vorrichtung zur Erzeugung eines Unterdrucks aufweist und/oder gemäß einem erfindungsgemäßen Verfahren betreibbar ist.

Ferner unter Schutz gestellt ist ein System, aufweisend eine erfindungsgemäße Vorrichtung mit einer Auslassvorrichtung und/oder mit einer Transportvorrichtung.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Seitenansicht einer erfindungsgemäßen Vorrichtung sowie einer erfindungsgemäßen Folienmaschine,
- Fig. 2: eine schematische Vorderansicht auf eine erfindungsgemäße Vorrichtung,
- Fig. 3: eine schematische Vorderansicht einer erfindungsgemäßen Vorrichtung,
- Fig. 4: eine weitere schematische Vorderansicht einer erfindungsgemäßen Vorrichtung,
- Fig. 5: eine schematische Seitenansicht auf eine erfindungsgemäße Vorrichtung,
- Fig. 6: eine schematische Rückansicht auf eine erfindungsgemäße Vorrichtung,
- Fig. 7: eine weitere schematische Rückansicht auf eine erfindungsgemäße Vorrichtung,
- Fig. 8: eine weitere schematische Rückansicht auf eine erfindungsgemäße Vorrichtung,
- Fig. 9: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

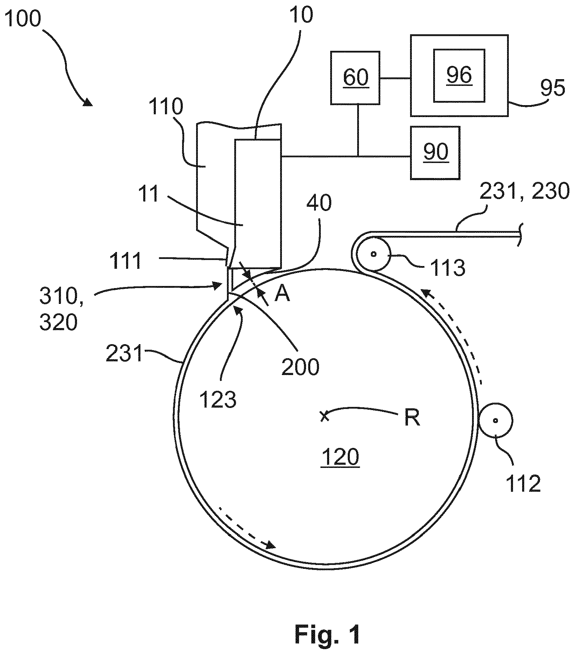

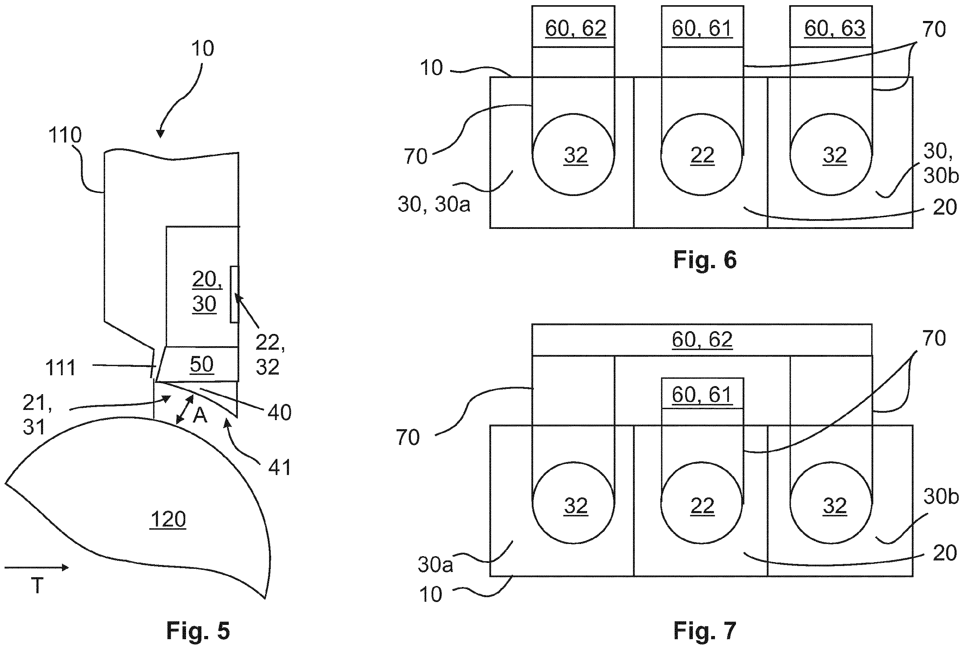

In Fig. 1 ist eine erfindungsgemäße Vorrichtung 10 in einer schematischen Seitenansicht gezeigt. Die erfindungsgemäße Vorrichtung 10 ist hierbei in einer erfindungsgemäßen Folienmaschine 100 integriert, wobei in Fig. 1 lediglich Teile dieser Folienmaschine 100 schematisch dargestellt sind. Die erfindungsgemäße Folienmaschine 100, zum Beispiel eine Gießfolienmaschine, weist eine Transportvorrichtung 120 auf. Bei der Transportvorrichtung 120 handelt es sich zum Beispiel um ein Chill Roll 120. Über eine Auslassvorrichtung 110, der zum Beispiel ein oder mehrere Extrudervorrichtungen vorgelagert sind, wird fließfähiges Folienmaterial 231 in Form einer Schmelzefahne 200 über einen Auslassspalt 111, insbesondere eine Düse 111, auf der Oberfläche der Transportvorrichtung 120 angeordnet. Die Transportvorrichtung 120 kann hierzu beispielsweise gekühlt ausgebildet sein, um ein Abkühlen bzw. Erstarren des Folienmaterials 231 an oder vor der Transportvorrichtung 120 zu bewirken. Für den Transport des Folienmaterials 231 rotiert die Transportvorrichtung 120 um eine Rotationsachse R in Richtung der in Fig. 1 gezeigten gestrichelten Pfeile. Das Folienmaterial 231 wird nach der Aufnahme durch die Transportvorrichtung 120 an einem Aufnahmeort 123 weiter in Richtung der gestrichelten Pfeile transportiert. An der Transportvorrichtung 120 sind ferner noch weitere Walzen 112, 113 angeordnet, welche beispielsweise als Abrisswalzen und/oder Putzwalzen ausgebildet sein können. Das Folienmaterial 231 verlässt die erfindungsgemäße Folienmaschine 100 als Folie 230. Die in Fig. 1 gezeigte Anordnung, insbesondere der Auslassvorrichtung 110 und/oder der erfindungsgemäßen Vorrichtung 10 an der Transportvorrichtung 120, ist dabei beispielhaft und kann auch variieren. So kann die Auslassvorrichtung 110 mit der erfindungsgemäßen Vorrichtung 10 beispielsweise auch in einer Tiefenrichtung T in Richtung der Walze 113 weiter versetzt angeordnet sein, wie in Fig. 5 zu sehen ist.

Im Bereich der Auslassvorrichtung 110 ist gemäß Fig. 1 weiter die erfindungsgemäße Vorrichtung 10 zur Erzeugung eines Unterdrucks für die Schmelzefahne 200 angeordnet. Die Vorrichtung 10 umfasst beispielsweise ein Gehäuse 11 und ist lösbar oder unlösbar mit der Auslassvorrichtung 110 verbunden. Alternativ ist es denkbar, dass die erfindungsgemäße Vorrichtung 10 unabhängig und als separates Bauteil, gegebenenfalls beabstandet zur Auslassvorrichtung 110, gegebenenfalls befestigt an der Transportvorrichtung 120, ausgebildet ist.

Zur Erzeugung eines ersten und zweiten Unterdrucks ist die erfindungsgemäße Vorrichtung 10 mit einer Strömungsvorrichtung 60 verbunden, wobei die Strömungsvorrichtung 60 separat von der Vorrichtung 10 ausgebildet sein kann oder in der Vorrichtung 10 integriert ist. Die Strömungsvorrichtung 60 ist beispielsweise als ein frequenzgeregeltes Gebläse 60 ausgebildet und wird bevorzugt durch eine Steuerungsvorrichtung 95 angesteuert und/oder geregelt. Hierdurch lässt sich beispielsweise die Drehzahl der Strömungsvorrichtung 60 und damit die Intensität des erzeugten Unterdrucks einstellen. Weiter ist vorzugsweise eine Sensorvorrichtung 90 an der erfindungsgemäßen Vorrichtung 10 angeordnet, um den durch die Strömungsvorrichtung 60 erzeugten Unterdruck zu messen. Die gemessenen Werte können beispielsweise in einer Datenspeichereinheit 96 der Steuerungsvorrichtung 95 zumindest zwischengespeichert werden. Durch den Vergleich der gemessenen Werte des erzeugten Unterdrucks (Ist-Wert) mit dem gewünschten Wert der Unterdruckintensität (Soll-Wert) durch die Steuerungsvorrichtung 95 kann somit ein Regelkreis bestehend aus zumindest der Steuerungsvorrichtung 95 und der Sensorvorrichtung 90 zur Ansteuerung der Strömungsvorrichtung 60 bereitgestellt werden.

Damit ein erster Unterdruck von einem zweiten Unterdruck getrennt erzeugt werden kann, muss ein entsprechender erster Einflussbereich 310 von einem zweiten Einflussbereich 320 strömungstechnisch getrennt werden. Hierzu dient wenigstens ein Abdichtelement 40, welches im Bereich des ersten Einflussbereichs 310 und/oder des zweiten Einflussbereichs 320 angeordnet ist.

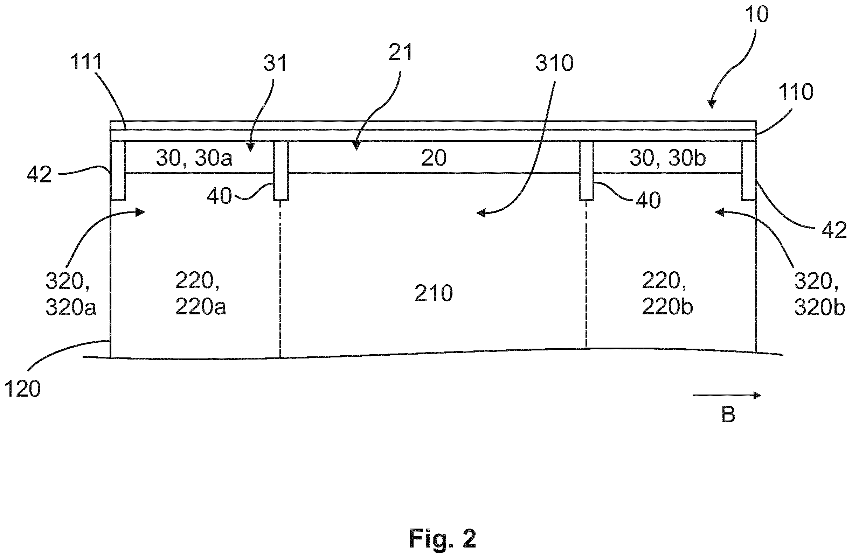

In Fig. 2 ist eine Vorderansicht auf eine erfindungsgemäße Vorrichtung 10 dargestellt. Dabei ist erkennbar, dass die Vorrichtung 10 in Breitenrichtung B benachbart angrenzend verschiedene Kammern, das heißt zumindest eine Hauptkammer 20 und zumindest eine Nebenkammer 30 für verschiedene Einflussbereiche 310, 320 aufweist. Die Nebenkammern 30, insbesondere eine erste Nebenkammer 30a und eine zweite Nebenkammer 30b, erzeugen dabei einen zweiten Unterdruck bzw. jeweils unterschiedliche zweite Unterdrücke in jeweiligen zweiten Einflussbereichen 320. Die erste Nebenkammer 30a ist dabei insbesondere einem linksseitigen zweiten Einflussbereich 320a und die zweite Nebenkammer 30b einem rechtsseitigen zweiten Einflussbereich 320b zugeordnet. Der Einflussbereich bestimmt dabei, in welchem Bereich der Folie 230 bzw. der Schmelzefahne 200 der entsprechende Unterdruck ausgeübt wird. So wird ein erster Unterdruck in dem ersten Einflussbereich 310 für einen Hauptbereich 210 der Schmelzefahne 200 bzw. der Folie 230 ausgeübt. Ein zweiter Unterdruck wird in dem zweiten Einflussbereich 320 für einen Randbereich 220 der Schmelzefahne 200 bzw. der Folie 230 ausgeübt. Dabei wird vorzugsweise in einem linksseitigen zweiten Einflussbereich 320a der zweite Unterdruck für einen ersten Randbereich 220a und im rechtsseitigen zweiten Einflussbereich 320b der zweite Unterdruck für einen zweiten Randbereich 220b der Schmelzefahne 200 bzw. der Folie 230 erzeugt. Die jeweiligen zweiten Unterdrücke können dabei identisch sein oder sich voneinander unterscheiden. Zur Erzeugung des Unterdrucks weist die Hauptkammer 20 vorzugsweise eine zur Transportvorrichtung 120 und/oder Schmelzefahne 200 ausgerichtete Hauptkammeröffnung 21 auf und die Nebenkammer 30 eine zur Transportvorrichtung 120 und/oder Schmelzefahne 200 ausgerichtete Nebenkammeröffnung 31 auf. Die Hauptkammeröffnung 21 und/oder die Nebenkammeröffnung 31 sind bevorzugt unmittelbar hinter der Schmelzefahne 200 anordenbar, insbesondere unterhalb der entsprechenden Auslassvorrichtung 110 bzw. des Auslassspalts 111, wie in Fig. 2 gezeigt ist.

Um den ersten und zweiten Einflussbereich 310, 320 voneinander abzutrennen, ist zumindest ein Abdichtelement 40 vorgesehen. Das Abdichtelement 40 ist mit einem in Fig. 1 gekennzeichneten Abstand A beabstandet zur Transportvorrichtung 120 angeordnet, um einen Kontakt mit der Oberfläche der Transportvorrichtung 120 zu vermeiden. Alternativ ist es denkbar, dass das Abdichtelement 40 derart flexibel und/oder elastisch ausgestaltet ist, dass ein Kontakt mit der Oberfläche der Transportvorrichtung 120 möglich ist ohne eine Beschädigung zu verursachen. Zur seitlichen Abgrenzung der zweiten Einflussbereiche 320 bzw. der Nebenkammern 30 zur äußeren Umgebung der erfindungsgemäßen Vorrichtung 10 sind ferner End-Abdichtungen 42 vorgesehen. Im Gegensatz zu den End-Abdichtungen 42 sind sämtliche Abdichtelemente 40 vorzugsweise zwischen der Hauptkammer 20 und einer der Nebenkammern 30 bzw. zwischen dem ersten Einflussbereich 310 und zumindest einem der zweiten Einflussbereiche 320 angeordnet.

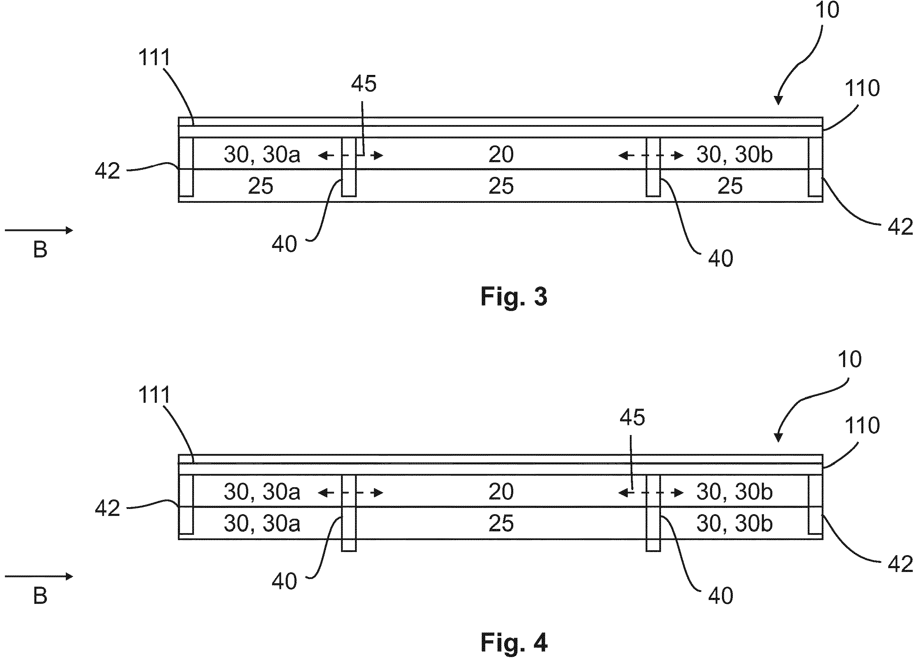

In den Fign. 3 und 4 ist schematisch eine weitere Vorderansicht auf eine erfindungsgemäße Vorrichtung 10 gezeigt. Dabei kann die erfindungsgemäße Vorrichtung 10 neben einer (ersten) Hauptkammer 20 eine weitere, zweite Hauptkammer 25 aufweisen. Dabei kann sich die zweite Hauptkammer 25 unterhalb (das heißt näher in Richtung der Transportvorrichtung 120) der ersten Hauptkammer 20 erstrecken. Weiter kann die zweite Hauptkammer 25 auch von der ersten Hauptkammer 20 versetzt angeordnet sein, beispielsweise in Richtung der in Fig. 5 durch einen Pfeil gekennzeichneten Tiefenrichtung T (in entgegengesetzter Richtung zur Schmelzefahne 200 oder zur Auslassvorrichtung 110). Somit kann durch das Zusammenspiel der ersten und zweiten Hauptkammer 20, 25 die Schmelzefahne 200 optimal angesaugt und gleichzeitig die eingeschleppte Luft reduziert werden.

Zur Einstellung und Veränderung der ersten und zweiten Einflussbereiche 310, 320 kann das zumindest eine Abdichtelement 40 verstellbar ausgestaltet sein, wie in den Figuren 3 und 4 durch gestrichelte Pfeile verdeutlicht wird. Hierzu ist beispielsweise ein Verstellmechanismus 45 vorgesehen, welcher zum Beispiel eine bewegliche Lagerung der Abdichtelemente 40 an der erfindungsgemäßen Vorrichtung 10 umfasst. Weiter kann der Verstellmechanismus 45 eine Aufnahme der erfindungsgemäßen Vorrichtung 10, insbesondere eines Gehäuses 11 der Vorrichtung 10, umfassen, welcher eine lösbare Befestigung des mindestens einen Abdichtelements 40 an der Vorrichtung 10 ermöglicht. Dabei können mehrere derartige Aufnahmen entlang der Breitenrichtung B an der Vorrichtung 10 vorgesehen sein, um das Abdichtelement 40 an unterschiedlichen Positionen in Breitenrichtung B an der Vorrichtung 10 zu befestigen. Somit kann die Erstreckung des ersten Einflussbereiches 310 und/oder des zweiten Einflussbereiches 320 in Breitenrichtung B variiert werden. Dabei ist es denkbar, dass sich das Abdichtelement 40 gemäß Fig. 3 ausschließlich im Bereich der (ersten) Hauptkammer 20 oder gemäß Fig. 4 ebenfalls im Bereich der zweiten Hauptkammer 25 erstreckt und/oder hiermit verbunden ist. Somit können gemäß Fig. 4 auch zweite Einflussbereiche 320 bzw. Nebenkammern 30 für die zweite Hauptkammer 25 gebildet werden. Dagegen weist die zweite Hauptkammer 25 gemäß Fig. 3 keine benachbarten Nebenkammern 30 und somit auch keine benachbarten ersten Einflussbereiche 310 auf.

In Fig. 5 ist eine weitere Seitenansicht auf eine erfindungsgemäße Vorrichtung 10 gezeigt, wobei eine Wandung 50 im Bereich der Hauptkammer 20 und/oder der Nebenkammer 30 dargestellt ist. Die Wandung 50 bildet insbesondere zumindest teilweise das Gehäuse 11. Die Wandung 50 kann dabei insbesondere fluchtend zu dem Abdichtelement 40 angeordnet sein, um gemeinsam mit dem Abdichtelement 40 den ersten Einflussbereich 310 von dem zweiten Einflussbereich 320 insbesondere strömungstechnisch zu trennen. Auch ist es denkbar, dass die Wandung 50, wie das Abdichtelement 40, durch den Verstellmechanismus 45 einstellbar und/oder verschiebbar und/oder austauschbar ausgestaltet ist. Weiter ist in Fig. 5 gezeigt, dass das Abdichtelement 40 eine Krümmung 41 aufweisen kann, um der Form der Oberfläche der Transportvorrichtung 120 angepasst zu werden. Die Hauptkammer 20 bzw. die Nebenkammer 30 weist außerdem einen entsprechenden Hauptkammerdurchgang 22 bzw. Nebenkammerdurchgang 32 auf, um die Hauptkammer 20 bzw. die Nebenkammer 30 mit einer Strömungsvorrichtung 60 zu verbinden.

In den Figuren 6 bis 8 ist die Verbindung der Hauptkammer 20 sowie der zumindest einen Nebenkammer 30 mit entsprechenden Strömungsvorrichtungen 60 gezeigt. Da die Strömungsvorrichtung 60, beispielsweise als ein Gebläse 60, den Unterdruck in der Hauptkammer 20 und/oder der Nebenkammer 30 der erfindungsgemäßen Vorrichtung 10 erzeugt, müssen die Kammern durch Leitungselemente 70 mit der Strömungsvorrichtung 60 verbunden werden. Die Leitungselemente 70, welche beispielsweise als luftführende Schläuche 70 ausgebildet sind, können hierbei beispielsweise an einem Hauptkammerdurchgang 22 der Hauptkammer 20 bzw. einem Nebenkammerdurchgang 32 der Nebenkammer 30 befestigt werden. Zur verbesserten Luftführung ist beispielsweise auch eine Dichtung im Bereich des Hauptkammerdurchgangs 22 und/oder des Nebenkammerdurchgangs 32 vorgesehen.

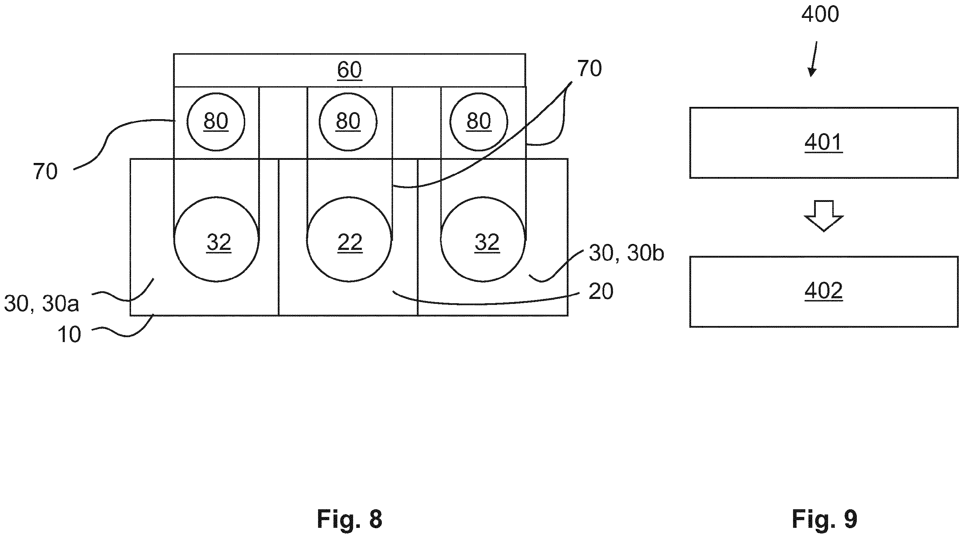

In Fig. 6 wird verdeutlicht, dass jede Hauptkammer 20 und jede Nebenkammer 30 jeweils mit unterschiedlichen Strömungsvorrichtungen 60 verbunden sein kann, um unterschiedliche Unterdrücke in dem jeweiligen Einflussbereich zu erzeugen. So kann eine erste Strömungsvorrichtung 61 einen ersten Unterdruck für die Hauptkammer 20, eine zweite Strömungsvorrichtung 62 einen zweiten Unterdruck für eine erste Nebenkammer 30a und eine dritte Strömungsvorrichtung 63 einen weiteren zweiten Unterdruck für eine zweite Nebenkammer 30b erzeugen. Alternativ ist es denkbar, dass gemäß Fig. 7 nur eine einzige zweite Strömungsvorrichtung 62 den zweiten Unterdruck sowohl für die erste Nebenkammer 30a als auch für die zweite Nebenkammer 30b erzeugt. Gemäß Fig. 8 kann auch eine einzige Strömungsvorrichtung 60 für sämtliche Kammern, das heißt sowohl für die Hauptkammer 20 als auch für die Nebenkammern 30, vorgesehen sein. In diesem Fall kann ein unterschiedlicher Unterdruck zum Beispiel durch Druckeinstellmittel 80, wie beispielsweise Drosseln, erzeugt werden.

In Fig. 9 ist schematisch ein erfindungsgemäßes Verfahren 400 visualisiert. Dabei wird gemäß einem ersten Verfahrensschritt 401 durch mindestens eine Hauptkammer 20 ein erster Unterdruck in einem ersten Einflussbereich 310 erzeugt. Gemäß einem zweiten Verfahrensschritt 402 wird durch mindestens eine Nebenkammer 30 ein zweiter Unterdruck in einem zweiten Einflussbereich 320 erzeugt.

### Bezuaszeichenliste

- 10: Vorrichtung
- 11: Gehäuse

- 20: Hauptkammer
- 21: Hauptkammeröffnung
- 22: Hauptkammerdurchgang
- 25: zweite Hauptkammer

- 30: Nebenkammer
- 30a: erste Nebenkammer
- 30b: zweite Nebenkammer
- 31: Nebenkammeröffnung
- 32: Nebenkammerdurchgang

- 40: Abdichtelement
- 41: Krümmung
- 42: End-Abdichtung

- 45: Verstellmechanismus
- 50: Wandung

- 60: Strömungsvorrichtung
- 61: erste Strömungsvorrichtung
- 62: zweite Strömungsvorrichtung
- 63: dritte Strömungsvorrichtung

- 70: Leitungselement

- 80: Druckeinstellmittel
- 90: Sensorvorrichtung
- 95: Steuerungsvorrichtung
- 96: Datenspeichereinheit

- 100: Folienmaschine
- 110: Auslassvorrichtung
- 111: Auslasspalt / Düse
- 112: Walze, Putzwalze
- 113: Walze, Abrisswalze
- 120: Transportvorrichtung
- 123: Aufnahmeort

- 200: Schmelzefahne
- 210: Hauptbereich
- 220: Randbereich
- 220a: erster Randbereich
- 220b: zweiter Randbereich
- 230: Folie
- 231: Folienmaterial

- 310: erster Einflussbereich
- 320: zweiter Einflussbereich
- 320a: linksseitiger zweiter Einflussbereich
- 320b: rechtsseitiger zweiter Einflussbereich

- 400: Verfahren
- 401: erster Verfahrensschritt
- 402: zweiter Verfahrensschritt
- B: Breitenrichtung
- T: Tiefenrichtung
- A: Abstand
- R: Achse

## Patentansprüche

1. Vorrichtung (10) zur Erzeugung eines Unterdrucks für die Stabilisierung einer Schmelzefahne (200) im Bereich einer Transportvorrichtung (120) einer Folienmaschine (100), insbesondere bei einem Herstellungsprozess einer Kunststofffolie (230), aufweisend:
- mindestens eine Hauptkammer (20) zur Erzeugung eines ersten Unterdrucks in einem ersten Einflussbereich (310),
- mindestens eine Nebenkammer (30) zur Erzeugung eines zweiten Unterdrucks in einem zweiten Einflussbereich (320), wobei
der erste Einflussbereich (310) wenigstens einem Hauptbereich (210) der Schmelzefahne (200) und der zweite Einflussbereich (320) wenigstens einem Randbereich (220) der Schmelzefahne (200) benachbart zum Hauptbereich (210) zuordenbar ist, und wobei
sich der erste Unterdruck von dem zweiten Unterdruck unterscheidet, um eine Stabilisierung der Schmelzefahne (200) zu bewirken, wobei die Hauptkammer (20) strömungstechnisch von der Nebenkammer (30) durch ein Abdichtelement (40) getrennt ist, **dadurch gekennzeichnet, dass** das Abdichtelement (40) an der Transportvorrichtung (120) kontaktiert.

2. Vorrichtung (10) nach Anspruch 1,
**dadurch gekennzeichnet,**
**dass** die Hauptkammer (20) und/oder die Nebenkammer (30) derart ausgestaltet und an der Transportvorrichtung (120) der Folienmaschine (100) anordenbar ist, dass die Schmelzefahne (200) an die Transportvorrichtung (120) der Folienmaschine (100) ansaugbar ist.

3. Vorrichtung (10) nach einem der vorhergehenden Ansprüche,
**dadurch gekennzeichnet,**
**dass** die Nebenkammer (30) derart ausgestaltet und an der Transportvorrichtung (120) der Folienmaschine (100) anordenbar ist, dass eine Stabilisierung des Randbereichs (220) durchführbar ist, und/oder dass die Vorrichtung (10) eine Breitenerstreckung in Breitenrichtung (B) aufweist, welche insbesondere an die Breite einer Auslassvorrichtung (110) der Folienmaschine (100) anpassbar ist, wobei die Hauptkammer (20) und die mindestens eine Nebenkammer (30) in Breitenrichtung (B) benachbart angeordnet sind.

4. Vorrichtung (10) nach einem der vorhergehenden Ansprüche,
**dadurch gekennzeichnet,**
**dass** ein Verstellmechanismus (45) vorgesehen ist, wodurch die Hauptkammer (20) und Nebenkammer (30) in ihrer Größe in Breitenrichtung (B) variabel einstellbar ist.

5. Vorrichtung (10) nach einem der vorhergehenden Ansprüche,
**dadurch gekennzeichnet,**
**dass** ein Abdichtelement (40) und/oder eine Wandung (50) zur Abgrenzung der Hauptkammer (20) von der Nebenkammer (30) verstellbar, insbesondere manuell verstellbar und/oder verschiebbar, ausgebildet ist.

6. Vorrichtung (10) nach einem der vorhergehenden Ansprüche,
**dadurch gekennzeichnet,**
**dass** wenigstens zwei Nebenkammern (30) vorgesehen sind, welche insbesondere im äußeren Seitenbereich der Vorrichtung (10) in Breitenrichtung (B) angeordnet sind, wobei zwischen den Nebenkammern (30) die Hauptkammer (20) angeordnet ist.

7. Vorrichtung (10) nach einem der vorhergehenden Ansprüche,
**dadurch gekennzeichnet,**
**dass** die Abmessung der mindestens einen Nebenkammer (30) in Breitenrichtung (B) derart ausgestaltet ist, dass der zweite Einflussbereich (320) der Nebenkammer (30) zwischen 2 % bis 10 % von dem gesamten Einflussbereich der Vorrichtung (10) oder des ersten Einflussbereiches (310) der Hauptkammer (20) beträgt, und/oder dass wenigstens ein Abdichtelement (40) in Breitenrichtung (B) stufenlos oder stufenweise verstellbar ausgestaltet ist, um zwischen der Hauptkammer (20) und der Nebenkammer (30) die jeweiligen Einflussbereiche (310, 320) variierbar, insbesondere vollständig, abzugrenzen, wobei insbesondere das Abdichtelement (40) zumindest nahezu fluiddicht ausgestaltet ist.

8. Vorrichtung (10) nach einem der vorhergehenden Ansprüche,
**dadurch gekennzeichnet,**
**dass** das Abdichtelement (40) austauschbar ausgeführt ist.

9. Vorrichtung (10) nach einem der vorhergehenden Ansprüche,
**dadurch gekennzeichnet,**
**dass** ein Abdichtelement (40) an der der Schmelzefahne (200) zuwandtbaren Seite eine der Transportvorrichtung (120) anpassbare gekrümmte, insbesondere konkave, Form aufweist, und/oder dass das Abdichtelement (40) flexibel und/oder elastisch verformbar ausgestaltet ist.

10. Vorrichtung (10) nach einem der vorhergehenden Ansprüche,
**dadurch gekennzeichnet,**
**dass** wenigstens eine Strömungsvorrichtung (60) zur Unterdruckerzeugung im ersten Einflussbereich (310) und/oder im zweiten Einflussbereich (320) vorgesehen ist, wobei insbesondere die Strömungsvorrichtung (60) frequenzgeregelt betrieben wird und/oder als Gebläse (60) ausgebildet ist.

11. Vorrichtung (10) nach einem der vorhergehenden Ansprüche,
**dadurch gekennzeichnet,**
**dass** wenigstens ein erstes luftführendes Leitungselement (70) zur Strömungsverbindung mit einer ersten Strömungsvorrichtung (61) an einem Hauptkammerdurchgang (22) befestigt ist, und wenigstens ein zweites luftführendes Leitungselement (70) zur Strömungsverbindung mit einer zweiten Strömungsvorrichtung (62) an einem von dem Hauptkammerdurchgang (22) beabstandeten Nebenkammerdurchgang (32) befestigt ist.

12. Vorrichtung (10) nach einem der vorhergehenden Ansprüche,
**dadurch gekennzeichnet,**
**dass** wenigstens ein Druckeinstellmittel (80) zur Veränderung des Unterdrucks für den Hauptbereich (210) und/oder den Randbereich (220) vorgesehen ist, wobei vorzugsweise ausschließlich eine einzige Strömungsvorrichtung (60) sowohl zur Unterdruckerzeugung im ersten Einflussbereich (310) als auch im zweiten Einflussbereich (320) vorgesehen ist.

13. Vorrichtung (10) nach einem der vorhergehenden Ansprüche,
**dadurch gekennzeichnet,**
**dass** mindestens eine Sensorvorrichtung (90) innerhalb der Hauptkammer (20) und/oder Nebenkammer (30) vorgesehen ist, um den Druck für den Hauptbereich (210) oder Randbereich (220) zu erfassen.

14. Vorrichtung (10) nach einem der vorhergehenden Ansprüche,
**dadurch gekennzeichnet,**
**dass** eine weitere, zweite Hauptkammer (25) vorgesehen ist, wobei insbesondere die zweite Hauptkammer (25) in Bezug zur Hauptkammer (20) entfernter zur Schmelzefahne (200) anordenbar ist, um Luft an der Transportvorrichtung (120) zu entfernen.

15. Vorrichtung (10) nach einem der vorhergehenden Ansprüche,
**dadurch gekennzeichnet,**
**dass** wenigstens eine Strömungsvorrichtung (60) zur geregelten Variierung des ersten und/oder zweiten Unterdrucks mit einer Steuerungsvorrichtung (95) elektrisch oder drahtlos verbunden ist, wobei insbesondere die Steuerungsvorrichtung (95) eine Datenspeichereinheit (96) zur Speicherung von Prozessparametern und/oder einen Regelalgorithmus aufweist.

16. Verfahren (400) zur Herstellung einer Folie (230), insbesondere einer Kunststofffolie, wobei Folienmaterial (231) aus einer Auslassvorrichtung (110) in Form einer Schmelzefahne (200) durch eine Transportvorrichtung (120) herausgeführt wird, und durch mindestens eine Hauptkammer (20) ein erster Unterdruck in einem ersten Einflussbereich (310) erzeugt wird, und
durch mindestens eine Nebenkammer (30) ein zweiter Unterdruck in einem zweiten Einflussbereich (320) erzeugt wird, wobei
der erste Einflussbereich (310) wenigstens einem Hauptbereich (210) der Schmelzefahne (200) und der zweite Einflussbereich (320) wenigstens einem Randbereich (220) der Schmelzefahne (200) benachbart zum Hauptbereich (210) zugeordnet wird, und wobei
der erste Unterdruck sich von dem zweiten Unterdruck unterscheidet, wodurch eine Stabilisierung der Schmelzefahne (200) bewirkt wird,
wobei die Hauptkammer (20) strömungstechnisch von der Nebenkammer (30) durch ein Abdichtelement (40) getrennt wird, **dadurch gekennzeichnet, dass** das Abdichtelement (40) an der Transportvorrichtung (120) kontaktiert.

17. Verfahren (400) nach Anspruch 16,
**dadurch gekennzeichnet,**
**dass** eine Abmessung der Nebenkammer (30) in Breitenrichtung (B) stufenlos oder stufenweise verstellbar an die Auslassvorrichtung (110) der Folienmaschine (100) angepasst wird und/oder dass eine Abmessung der Nebenkammer (30) in Breitenrichtung (B) und/oder die Intensität des zweiten Unterdrucks automatisch an Prozessparametern angepasst werden.

18. Verfahren (400) nach einem der Ansprüche 16 bis 17,
**dadurch gekennzeichnet,**
**dass** der zweite Unterdruck und/oder der erste Unterdruck unabhängig voneinander an Prozessparametern angepasst werden.

19. Verfahren (400) nach einem der Ansprüche 16 bis 18,
**dadurch gekennzeichnet,**
**dass** die durch das Verfahren (400) hergestellte Folie (230) eine Dicke von max. 15 µm, bevorzugt max. 12 µm aufweist und/oder dass der erste Unterdruck und/oder der zweite Unterdruck automatisch und/oder geregelt, nämlich unabhängig voneinander, variiert wird, insbesondere in Abhängigkeit von Prozessparametern.

20. Verfahren (400) nach einem der Ansprüche 16 bis 19,
**dadurch gekennzeichnet,**
**dass** eine Vorrichtung (10) nach einem der Ansprüche 1 bis 15 betrieben wird.

21. Folienmaschine (100) zur Herstellung von Kunststofffolie (230), insbesondere eine Gießfolienmaschine, wobei die Folienmaschine (100) eine Transportvorrichtung (120) zum Transport von Folienmaterial (231) und eine Auslassvorrichtung (110) umfasst, wobei
das Folienmaterial (231) aus der Auslassvorrichtung (110) in Form einer Schmelzefahne (200) durch die Transportvorrichtung (120) herausführbar ist,
**dadurch gekennzeichnet,**
**dass** mindestens eine Hauptkammer (20) zur Erzeugung eines ersten Unterdrucks in einem ersten Einflussbereich (310) und mindestens eine Nebenkammer (30) zur Erzeugung eines zweiten Unterdrucks in einem zweiten Einflussbereich (320) vorgesehen ist, wobei
der erste Einflussbereich (310) wenigstens einem Hauptbereich (210) der Schmelzefahne (200) und der zweite Einflussbereich (320) wenigstens einem Randbereich (220) der Schmelzefahne (200) benachbart zum Hauptbereich (210) zuordenbar ist, und wobei
sich der erste Unterdruck von dem zweiten Unterdruck unterscheidet, um eine Stabilisierung der Schmelzefahne (200) zu bewirken, wobei die Hauptkammer (20) strömungstechnisch von der Nebenkammer (30) durch ein Abdichtelement (40) getrennt ist, **dadurch gekennzeichnet, dass** das Abdichtelement (40) an der Transportvorrichtung (120) kontaktiert.

22. Folienmaschine (100) nach Anspruch 21,
**dadurch gekennzeichnet,**
**dass** sie eine Vorrichtung (10) nach einem der Ansprüche 1 bis 15 umfasst.

## Claims

1. A device (10) for generating a negative pressure for the stabilization of a melt strip (200) in the region of a transport device (120) of a film machine (100), in particular in a manufacturing process of a plastic film (230), comprising
- at least one main chamber (20) for generating a first negative pressure in a first region of influence (310),
- at least one secondary chamber (30) for generating a second negative pressure in a second region of influence (320), wherein
the first region of influence (310) can be assigned to at least one main region (210) of the melt strip (200) and the second region of influence (320) can be assigned to at least one edge region (220) of the melt strip (200) adjacent to the main region (210), and wherein the first negative pressure differs from the second negative pressure, in order to effect stabilization of the melt strip (200), wherein the main chamber (20) is fluidically separated from the secondary chamber (30) by a sealing element (40),
**characterized in that**
the sealing element (40) makes contact with the transport device (120).

2. The device (10) according to claim 1,
**characterized in**
**that** the main chamber (20) and/or the secondary chamber (30) is designed and can be arranged on the transport device (120) of the film machine (100) in such a way that the melt strip (200) can be sucked onto the transport device (120) of the film machine (100).

3. The device (10) according to one of the preceding claims,
**characterized in**
**that** the secondary chamber (30) is designed and can be arranged on the transport device (120) of the film machine (100) in such a way that a stabilization of the edge region (220) can be carried out, and/or that the device (10) has a width extension in the width direction (B), which in particular can be adapted to the width of an outlet device (110) of the film machine (100), wherein the main chamber (20) and the at least one secondary chamber (30) are arranged adjacent to one another in the width direction (B).

4. The device (10) according to any one of the preceding claims,
**characterized in**
**that** an adjustment mechanism (45) is provided, whereby the main chamber (20) and secondary chamber (30) can be variably adjusted in their size in the width direction (B).

5. The device (10) according to any one of the preceding claims,
**characterized in**
**that** a sealing element (40) and/or a wall (50) for delimiting the main chamber (20) from the secondary chamber (30) is designed so as to be adjustable, in particular manually adjustable and/or displaceable.

6. The device (10) according to any one of the preceding claims,
**characterized in**
**that** at least two secondary chambers (30) are provided, which are arranged in particular in the outer side region of the device (10) in the width direction (B), wherein the main chamber (20) is arranged between the secondary chambers (30).

7. The device (10) according to any one of the preceding claims,
**characterized in**
**that** the dimension of the at least one secondary chamber (30) in the width direction (B) is configured in such a way that the second region of influence (320) of the secondary chamber (30) is between 2% and 10% of the entire region of influence of the device (10) or of the first region of influence (310) of the main chamber (20), and/or that at least one sealing element (40) is configured to be adjustable in the width direction (B) in a stepless or stepwise manner, in order to variably, in particular completely, delimit the respective regions of influence (310, 320) between the main chamber (20) and the secondary chamber (30), wherein in particular the sealing element (40) is configured at least virtually in a fluid-tight manner.

8. The device (10) according to any one of the preceding claims,
**characterized in**
**that** the sealing element (40) is designed so as to be interchangeable.

9. The device (10) according to any one of the preceding claims,
**characterized in**
**that** a sealing element (40) has a curved, in particular concave, shape which can be adapted to the transport device (120) on the side which can face the melt strip (200), and/or that the sealing element (40) can be designed so as to be flexible and/or elastically deformable.

10. The device (10) according to any one of the preceding claims,
**characterized in**
**that** at least one flow device (60) is provided for generating negative pressure in the first region of influence (310) and/or in the second region of influence (320), wherein in particular the flow device (60) is operated in a frequency-controlled manner and/or is designed as a blower (60).

11. The device (10) according to any one of the preceding claims,
**characterized in**
**that** at least one first air-conducting line element (70) is fastened to a main chamber passage (22) for flow connection with a first flow device (61), and at least one second air-conducting line element (70) is fastened to a secondary chamber passage (32) spaced apart from the main chamber passage (22) for flow connection with a second flow device (62).

12. The device (10) according to any one of the preceding claims,
**characterized in**
**that** at least one pressure setting means (80) is provided for changing the negative pressure for the main region (210) and/or the edge region (220), wherein preferably exclusively a single flow device (60) is provided for both negative pressure generation in the first region of influence (310) and in the second region of influence (320).

13. The device (10) according to any one of the preceding claims,
**characterized in**
**that** at least one sensor device (90) is provided within the main chamber (20) and/or secondary chamber (30) in order to detect the pressure for the main region (210) or edge region (220).

14. The device (10) according to any one of the preceding claims,
**characterized in**
**that** a further, second main chamber (25) is provided, wherein in particular the second main chamber (25) can be arranged remote from the melt strip (200) with respect to the main chamber (20) in order to remove air at the transport device (120).

15. The device (10) according to any one of the preceding claims,
**characterized in**
**that** at least one flow device (60) for the controlled variation of the first and/or second negative pressure is electrically or wirelessly connected to a control device (95), wherein in particular the control device (95) has a data storage unit (96) for storing process parameters and/or a control algorithm.

16. A method (400) for producing a film (230), in particular a plastic film, wherein film material (231) is fed out of an outlet device (110) in the form of a melt strip (200) by a transport device (120), and a first negative pressure is generated in a first region of influence (310) by at least one main chamber (20), and
a second negative pressure is generated in a second region of influence (320) by at least one secondary chamber (30), wherein
the first region of influence (310) is assigned to at least one main region (210) of the melt strip (200) and the second region of influence (320) is assigned to at least one edge region (220) of the melt strip (200) adjacent to the main region (210), and wherein
the first negative pressure differs from the second negative pressure, thereby causing stabilization of the melt strip (200),
wherein the main chamber (20) is fluidically separated from the secondary chamber (30) by a sealing element (40),
**characterized in**
**that** the sealing element (40) makes contact with the transport device (120).

17. The method (400) according to claim 16,
**characterized in**
**that** a dimension of the secondary chamber (30) in the width direction (B) is adjustably adapted to the outlet device (110) of the film machine (100) in a stepless or stepwise manner and/or that a dimension of the secondary chamber (30) in the width direction (B) and/or the intensity of the second negative pressure are automatically adapted to process parameters.

18. The method (400) according to any one of claims 16 to 17,
**characterized in**
**that** the second negative pressure and/or the first negative pressure are adapted independently of one another to process parameters.

19. The method (400) according to any one of claims 16 to 18,
**characterized in**
**that** the film (230) produced by the method (400) has a thickness of max. 15 µm, preferably max. 12 µm and/or that the first negative pressure and/or the second negative pressure is varied automatically and/or regulated, in particular independently of one another, in particular as a function of process parameters.

20. The method (400) according to any one of claims 16 to 19,
**characterized in**
**that** a device (10) is operated according to any one of claims 1 to 15.

21. A film machine (100) for producing plastic film (230), in particular a casting film machine, wherein the film machine (100) comprises a transport device (120) for transporting film material (231) and an outlet device (110), wherein
the film material (231) can be fed out of the outlet device (110) in the form of a melt strip (200) by the transport device (120),
**characterized in**
**that** at least one main chamber (20) is provided for generating a first negative pressure in a first region of influence (310) and at least one secondary chamber (30) for generating a second negative pressure in a second region of influence (320), wherein
the first region of influence (310) can be assigned to at least one main region (210) of the melt strip (200) and the second region of influence (320) can be assigned to at least one edge region (220) of the melt strip (200) adjacent to the main region (210), and wherein the first negative pressure differs from the second negative pressure, in order to to effect stabilization of the melt strip (200), wherein the main chamber (20) is fluidically separated from the secondary chamber (30) by a sealing element (40),
**characterized in**
**that** the sealing element (40) makes contact with the transport device (120).

22. The film machine (100) according to claim 21,
**characterized in**
**that** said film machine comprises a device (10) according to any one of claims 1 to 15.

## Revendications

1. Dispositif (10) pour la production d'une dépression pour la stabilisation d'une bande de matière fondue (200) au niveau d'un dispositif de transport (120) d'une machine à film (100), plus particulièrement lors d'un processus de fabrication d'un film de matière plastique (230), comprenant :
- au moins une chambre principale (20) pour la production d'une première dépression sans une première zone d'influence (310),
- au moins une chambre secondaire (30) pour la production d'une deuxième dépression dans une deuxième zone d'influence (320), dans lequel
la première zone d'influence (310) peut être attribuée à au moins une zone principale (210) de la bande de matière fondue (200) et la deux-là zone d'influence (320) peut être attribuée à au moins une zone de bord (220) de la bande de matière fondue (200), voisine de la zone principale (210) et dans lequel
la première dépression est différente de la deuxième dépression afin de provoquer une stabilisation de la bande de matière fondue (200), dans lequel la chambre principale (20) est séparée, du point de vue de l'écoulement, de la chambre secondaire (30) par un élément d'étanchéité (40), **caractérisé en ce que**
l'élément d'étanchéité (40) est mis en contact avec le dispositif de transport (120).

2. Dispositif (10) selon la revendication 1,
**caractérisé en ce que**
la chambre principale (20) et/ou la chambre secondaire (30) sont conçues et peuvent être disposées sur le dispositif de transport (120) de la machine à film (100), de façon à ce que la bande de matière fondue (200) puisse être aspirée au niveau du dispositif de transport (120) de la machine à film (100).

3. Dispositif (10) selon l'une des revendications précédentes,
**caractérisé en ce que**
la chambre secondaire (30) est conçue et peut être disposée sur le dispositif de transport (120) de la machine à film (100) de façon à ce qu'une stabilisation de la zone de bord (220) puisse être effectuée et/ou de façon à ce que le dispositif (10) présente une extension dans la direction de la largeur (B) qui peut être adaptée, plus particulièrement, à la largeur d'un dispositif de sortie (110) de la machine à film (100), dans lequel la chambre principale (20) et l'au moins une chambre secondaire (30) sont disposées de manière adjacente dans la direction de la largeur (B).

4. Dispositif (10) selon l'une des revendications précédentes,
**caractérisé en ce que**
un mécanisme de réglage (45) est prévu, qui permet de régler de manière variable la chambre principale (20) et la chambre secondaire (30) en ce qui concerne leur taille dans la direction de la largeur (B).

5. Dispositif (10) selon l'une des revendications précédentes,
**caractérisé en ce que**
un élément d'étanchéité (40) et/ou une paroi (50) qui sépare la chambre principale (20) de la chambre secondaire (30) est conçue de manière mobile, plus particulièrement de manière mobile et/ou coulissante manuellement.

6. Dispositif (10) selon l'une des revendications précédentes,
**caractérisé en ce que**
au moins deux chambres secondaires (30) sont prévues, qui sont disposées plus particulièrement dans la zone latérale extérieure du dispositif (10) dans la direction de la largeur (B), dans lequel la chambre principale (20) est disposée entre les chambres secondaires (30).

7. Dispositif (10) selon l'une des revendications précédentes,
**caractérisé en ce que**
la dimension de l'au moins une chambre de secondaire (30) dans la direction de la largeur (B) est conçue de façon à ce que la deuxième zone d'influence (320) de la chambre secondaire (30) représente entre 2 % et 10 % de l'ensemble de la zone d'influence du dispositif (10) ou de la première zone d'influence (310) de la chambre principale (20) et/ou **en ce qu'**au moins un élément d'étanchéité (40) est conçu de manière mobile progressivement ou par pas dans la direction de la largeur (B), afin de séparer les zones d'influence (310, 320) respectives entre la chambre principale (20) et la chambre secondaire (30) de manière variable, plus particulièrement de manière complète, dans lequel, plus particulièrement, l'élément d'étanchéité (40) est conçu de manière au moins presque étanche aux fluides.

8. Dispositif (10) selon l'une des revendications précédentes,
**caractérisé en ce que**
l'élément d'étanchéité (40) est conçu de manière interchangeable.

9. Dispositif (10) selon l'une des revendications précédentes,
**caractérisé en ce que**
un élément d'étanchéité (40) présente, sur le côté pouvant être orienté vers la bande de matière fondue (200), une forme incurvée, plus particulièrement concave, pouvant être adaptée au dispositif de transport (120) et/ou **en ce que** l'élément d'étanchéité (40) est conçu de manière flexible et/ou déformable élastiquement.

10. Dispositif (10) selon l'une des revendications précédentes,
**caractérisé en ce que**
au moins un dispositif d'écoulement (60) est prévu pour la production d'une dépression dans la première zone d'influence (310) et/ou dans la deuxième zone d'influence (320), dans lequel, plus particulièrement, le dispositif d'écoulement (60) fonctionne de manière régulée en fréquence et/ou est conçu comme un ventilateur (60).

11. Dispositif (10) selon l'une des revendications précédentes,
**caractérisé en ce que**
au moins un premier élément de conduite d'air (70) est fixé, pour une liaison d'écoulement avec un premier dispositif d'écoulement (61), à un passage de chambre principale (22) et au moins un deuxième élément de conduite d'air (70) est fixé, pour une liaison d'écoulement avec un deuxième dispositif d'écoulement (62), à un passage de chambre secondaire (32) distant du passage de chambre principale (22).

12. Dispositif (10) selon l'une des revendications précédentes,
**caractérisé en ce que**
au moins un moyen de réglage de pression (80) est prévu pour la modification de la dépression pour la zone principale (210) et/ou la zone de bord (220), dans lequel, de préférence, un seul dispositif d'écoulement (60) est prévu pour la production d'une dépression aussi bien dans la première zone d'influence (310) que dans la deuxième zone d'influence (320).

13. Dispositif (10) selon l'une des revendications précédentes,
**caractérisé en ce que**
au moins un dispositif de capteur (90) est prévu à l'intérieur de la chambre principale (20) et/ou de la chambre secondaire (30), afin de mesurer la pression pour la zone principale (210) ou la zone de bord (220).

14. Dispositif (10) selon l'une des revendications précédentes,
**caractérisé en ce que**
une deuxième chambre principale (25) est prévue, dans lequel plus particulièrement la deuxième chambre principale (25) peut être disposée plus loin de la bande de matière fondue (200) que la chambre principale (20), afin d'éliminer l'air au niveau du dispositif de transport (120).

15. Dispositif (10) selon l'une des revendications précédentes,
**caractérisé en ce que**
au moins un dispositif d'écoulement (60) est relié électriquement ou sans fil, pour la variation régulée de la première et/ou de la deuxième dépression, avec un dispositif de commande (95), dans lequel, plus particulièrement, le dispositif de commande (95) comprend une unité d'enregistrement de données (96) pour l'enregistrement de paramètres du processus et/ou un algorithme de régulation.

16. Procédé (400) pour la fabrication d'un film (230), plus particulièrement d'un film de matière plastique, dans lequel un matériau en film (231) est guidé hors d'un dispositif de sortie (110) sous la forme d'une bande de matière fondue (200) par un dispositif de transport (120) et une première dépression est produite dans une première zone d'influence (310) par au moins une chambre principale (20) et
une deuxième dépression est produite dans une deuxième zone d'influence (320) par une chambre secondaire (30), dans lequel
la première zone d'influence (310) est attribuée à au moins une zone principale (210) de la bande de matière fondue (200) et la deuxième zone d'influence (320) est attribuée au moins à une zone de bord (220) de la bande de matière fondue (200) voisine de la zone principale (210), dans lequel
la première dépression est différente de la deuxième dépression, ce qui permet de provoquer une stabilisation de la bande de matière fondue (200),
dans lequel la chambre principale (20) est séparée, du point de vue de l'écoulement, de la chambre secondaire (30) par un élément d'étanchéité (40), **caractérisé en ce que**
l'élément d'étanchéité (40) est mis en contact avec le dispositif de transport (120).

17. Procédé (400) selon la revendication 16,
**caractérisé en ce que**
une dimension de la chambre secondaire (30) dans la direction de la largeur (B) est adaptée de manière réglable progressivement ou par pas au dispositif de sortie (110) de la machine à film (100) et/ou **en ce qu'**une dimension de la chambre secondaire (30) dans la direction de la largeur (B) et/ou l'intensité de la deuxième dépression sont adaptées automatiquement aux paramètres du processus.

18. Procédé (400) selon l'une des revendications 16 à 17,
**caractérisé en ce que**
la deuxième dépression et/ou la première dépression sont adaptées indépendamment entre elles aux paramètres du processus.

19. Procédé (400) selon l'une des revendications 16 à 18,
**caractérisé en ce que**
le film (230) fabriqué à l'aide du procédé (400) présente une épaisseur de 15 µm maximum, de préférence de 12 µm maximum et/ou **en ce que** la première dépression et/ou la deuxième dépression sont modifiées de manière automatique et/ou régulée et indépendamment l'une de l'autre, plus particulièrement en fonction des paramètres du processus.

20. Procédé (400) selon l'une des revendications 16 à 19,
**caractérisé en ce que**
un dispositif (10) fonctionne selon l'une des revendications 1 à 15.

21. Machine à film (100) pour la fabrication d'un film de matière plastique (230), plus particulièrement une machine à film de coulée, dans lequel la machine à film (100) comprend un dispositif de transport (120) pour le transport du matériau de type film (231) et un dispositif de sortie (110), dans lequel
le matériau de type film (231) peut être guidé hors du dispositif de sortie (110) sous la forme d'une bande de matière fondue (200) par le dispositif de transport (120),
**caractérisé en ce que**
au moins une chambre principale (20) est prévue pour la production d'une première dépression dans une première zone d'influence (310) et au moins une chambre secondaire (30) est prévue pour la production d'une deuxième dépression dans une deuxième zone d'influence (320), dans lequel
la première zone d'influence (310) peut être attribuée à une zone zone principale (210) de la bande de matière fondue (200) et la deuxième zone d'influence (320) peut être attribuée à au moins une zone de bord (220) de la bande de matière fondue (200) voisine de la zone principale (210), et dans lequel
la première dépression est différente de la deuxième dépression afin de provoquer une stabilisation de la bande de matière fondue (200), dans lequel la chambre principale (20) est séparée, du point de vue de l'écoulement, de la chambre secondaire (30) par un élément d'étanchéité (40), **caractérisé en ce que**
l'élément d'étanchéité (40) est mis en contact avec le dispositif de transport (120).

22. Machine à film (100) selon la revendication 21,
**caractérisé en ce que**
elle comprend un dispositif (10) selon l'une des revendications 1 à 15.
